# EUROPEAN PATENT SPECIFICATION

(11) **EP 3 787 345 B1**
(45) Date of publication and mention of the grant of the patent: **02.08.2023**
(21) Application number: 19827400.3
(22) Date of filing: 24.05.2019
(51) Int. Cl.: H04W 76/12, H04W 40/36, H04L 45/02

(54) **METHOD, DEVICE, AND SYSTEM FOR UPDATING PATH**
VERFAHREN, VORRICHTUNG UND SYSTEM ZUR AKTUALISIERUNG EINES PFADES
PROCÉDÉ, DISPOSITIF ET SYSTÈME PERMETTANT DE METTRE À JOUR UN CHEMIN

(30) Priority: 26.06.2018 CN 201810673053
(43) Date of publication of application: 03.03.2021
(73) Proprietor: HUAWEI TECHNOLOGIES CO., LTD., Shenzhen, Guangdong 518129 (CN)
(72) Inventor: JING, Hao, Shenzhen, Guangdong 518129 (CN); CUI, Wenqi, Shenzhen, Guangdong 518129 (CN); ZONG, Zaifeng, Shenzhen, Guangdong 518129 (CN); ZHU, Fenqin, Shenzhen, Guangdong 518129 (CN)
(74) Representative: Körber, Martin Hans
(86) International application number: PCT/CN2019/088266
(87) International publication number: WO 2020/001209

(56) References cited:
- CN-A- 101 483 539
- CN-A- 101 686 197
- CN-A- 104 011 548
- US-A1- 2014 002 308
- INTERDIGITAL INC: "Corrections to Service Request procedure", 3GPP DRAFT; 23502_CR0331R1_5GS_PH1_(REL-15)_S2-184341_ WAS_S2-183545_CORRECTION TO SERVICE REQUEST PROCEDURE, 3RD GENERATION PARTNERSHIP PROJECT (3GPP), MOBILE COMPETENCE CENTRE ; 650, ROUTE DES LUCIOL , vol. SA WG2, no. Sanya, China; 20180416 - 20180420 10 June 2018 (2018-06-10), XP051458304, Retrieved from the Internet: URL:http://www.3gpp.org/ftp/Meetings%5F3GP P%5FSYNC/SA/Docs [retrieved on 2018-06-10]

## Description

This application claims priority to Chinese Patent Application No. 201810673053.8, filed with the China National Intellectual Property Administration on June 26, 2018 and entitled "PATH UPDATE METHOD, DEVICE, AND SYSTEM".

### TECHNICAL FIELD

This application relates to the field of communications technologies, and in particular, to a path update method, a device, and a system.

### BACKGROUND

In a fifth generation (5rd generation, 5G) system, in existing network procedures such as a handover (handover, HO) procedure, a service request (service request, SR) procedure, or a registration update procedure, there is a case in which a terminal moves out of a service scope of a user plane function (user plane function, UPF) network element (collectively referred to as a protocol data unit (protocol data unit, PDU) session anchor (PDU session anchor, PSA) below) connected to a next generation radio access network (next generation radio access network, NG-RAN) device. In this case, a session management function (session management function, SMF) network element selects a new UPF network element as an intermediate UPF (intermediate UPF, I-UPF) network element. Alternatively, in the 5G system, in the existing network procedures such as the HO procedure, the SR procedure, or the registration update procedure, there is a case in which the terminal moves into the service scope of the PSA connected to the NG-RAN device. In this case, the SMF network element determines to delete the I-UPF network element. If the SMF network element determines, when there is no I-UPF network element, to insert an I-UPF network element, or if the SMF network element determines, when there is an I-UPF network element, to delete the I-UPF network element, core-network tunnel information of the PSA changes.

However, according to an existing protocol, it is considered that the core-network tunnel information of the PSA does not change. In the foregoing case in which the I-UPF network element is inserted or the UPF network element is deleted, the SMF network element sends the original core-network tunnel information of the PSA to the I-UPF network element. This obviously affects user plane tunnel establishment, and consequently the user plane tunnel establishment may fail.

Interdigital Inc: "Corrections to Service Request procedure" 3GPP DRAFT, Vol. SA WG2, S2-183545, Sanya, China; 20180416, XP051458304, discloses service request procedure.

### SUMMARY

Embodiments of this application provide a path update method during session management procedures according to independent claims 1 and 7 and their corresponding devices according to independent claims 9 and 10.

To achieve the foregoing objective, the following technical solutions are used in the embodiments of this application.

According to the invention, a path update method is provided. The method includes: A session management network element obtains target path information. The target path information includes first path information and second path information that are corresponding to an anchor user plane network element and that are allocated to a terminal. The first path information is used to establish a first path between the anchor user plane network element and an access device, and the second path information is used to establish a second path between the anchor user plane network element and an intermediate user plane network element. The session management network element associates the target path information with a target data packet processing policy. The target data packet processing policy is used to process a data packet received from the first path and the second path. According to this solution, the session management network element obtains the first path information and/or the second path information that are/is corresponding to the anchor user plane network element, and both the first path information and the second path information are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is inserted or the intermediate user plane network element is deleted, a corresponding user plane path can be updated in a timely manner on a premise that a data packet processing manner is not changed.

According to the invention, the target path information is the first path information and the second path information, and correspondingly, that a session management network element obtains target path information specifically includes: The session management network element allocates the first path information and the second path information to the terminal. Correspondingly, the path update method provided in this embodiment of this application further includes: The session management network element determines the target data packet processing policy. According to this solution, the session management network element can obtain the first path information, the second path information, and the target data packet processing policy.

According to the invention, that the session management network element associates the target path information with a target data packet processing policy specifically includes: The session management network element generates a first rule based on the first path information and the target data packet processing policy. The first rule includes the first path information and the target data packet processing policy. The session management network element generates a second rule based on the second path information and the target data packet processing policy. The second rule includes the second path information and the target data packet processing policy. Correspondingly, the path update method provided in this embodiment of this application further includes: The session management network element sends the first rule and the second rule to the anchor user plane network element. According to this solution, the first path information and the second path information can be associated with the target data packet processing policy.

In the first aspect, that the session management network element associates the target path information with a target data packet processing policy specifically includes: The session management network element generates a third rule based on the first path information, the second path information, and the target data packet processing policy. The third rule includes the first path information, the second path information, and the target data packet processing policy. Correspondingly, the path update method provided in this embodiment of this application further includes: The session management network element sends the third rule to the anchor user plane network element. According to this solution, the first path information and the second path information can be associated with the target data packet processing policy.

In the first aspect, the path update method provided in this embodiment of this application further includes: The session management network element sends first indication information to the anchor user plane network element. The first indication information is used by the anchor user plane network element to establish the first path or the second path. According to this solution, the anchor user plane network element can determine that the first path or the second path needs to be established.

In the first aspect, the target path information is the first path information and the second path information, and correspondingly, that the anchor user plane network element obtains target path information includes: The anchor user plane network element receives second indication information from a session management network element. The second indication information is used to indicate the anchor user plane network element to allocate the first path information and the second path information to the terminal. The anchor user plane network element allocates the first path information and the second path information to the terminal based on the second indication information. Correspondingly, the path update method provided in this embodiment of this application further includes: The anchor user plane network element receives the target data packet processing policy from the session management network element. According to this solution, the anchor user plane network element can obtain the first path information, the second path information, and the target data packet processing policy.

In the first aspect, that the anchor user plane network element receives the target data packet processing policy from the session management network element specifically includes: The anchor user plane network element receives a first rule and a second rule from the session management network element. Both the first rule and the second rule include the target data packet processing policy. Correspondingly, that the anchor user plane network element associates the target path information with a target data packet processing policy specifically includes: The anchor user plane network element associates the first path information with the first rule, and the anchor user plane network element associates the second path information with the second rule. According to this solution, the first path information and the second path information can be associated with the target data packet processing policy.

In the first aspect, that the anchor user plane network element receives the target data packet processing policy from the session management network element specifically includes: The anchor user plane network element receives a third rule from the session management network element. The third rule includes the target data packet processing policy. Correspondingly, that the anchor user plane network element associates the target path information with a target data packet processing policy specifically includes: The anchor user plane network element associates the first path information and the second path information with the third rule. According to this solution, the first path information and the second path information can be associated with the target data packet processing policy.

In the first aspect, the path update method provided in this embodiment of this application further includes: The anchor user plane network element receives first indication information from the session management network element. The first indication information is used by the anchor user plane network element to establish the first path or the second path. According to this solution, the anchor user plane network element can determine that the first path or the second path needs to be established.

In the first aspect, the target path information is the second path information, and correspondingly, that a session management network element obtains target path information includes: The session management network element allocates the second path information to the terminal. Correspondingly, that the session management network element associates the target path information with a target data packet processing policy specifically includes: The session management network element generates a second rule based on the target data packet processing policy and the second path information. The second rule includes the target data packet processing policy and the second path information. Correspondingly, the path update method provided in this embodiment of this application further includes: The session management network element sends the second rule to the anchor user plane network element, and the session management network element sends the second path information to the intermediate user plane network element. According to this solution, the anchor user plane network element obtains the second path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is inserted, a corresponding user plane path can be updated in a timely manner on a premise that a data packet processing manner is not changed.

In the first aspect, the target path information is the second path information, and correspondingly, that a session management network element obtains target path information includes: The session management network element allocates the second path information to the terminal. Correspondingly, that the session management network element associates the target path information with a target data packet processing policy specifically includes: The session management network element obtains a first rule corresponding to the first path information. The first rule includes the first path information and the target data packet processing policy. The session management network element associates the second path information with the first rule to obtain an updated first rule. Correspondingly, the path update method provided in this embodiment of this application further includes: The session management network element sends the updated first rule to the anchor user plane network element, and the session management network element sends the second path information to the intermediate user plane network element. According to this solution, the anchor user plane network element obtains the second path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is inserted, a corresponding user plane path can be updated in a timely manner on a premise that a data packet processing manner is not changed.

In the first aspect, the target path information is the second path information, and correspondingly, that a session management network element obtains target path information includes: The anchor user plane network element receives the second path information and third indication information from a session management network element. The third indication information is used to indicate the anchor user plane network element to associate the second path information with a first rule. The first rule includes the first path information and the target data packet processing policy. Correspondingly, that the session management network element associates the target path information with a target data packet processing policy specifically includes: The anchor user plane network element associates the second path information with the first rule based on the third indication information. According to this solution, the anchor user plane network element obtains the second path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is inserted, a corresponding user plane path can be updated in a timely manner on a premise that a data packet processing manner is not changed.

In the first aspect, the target path information is the second path information, and correspondingly, that an anchor user plane network element obtains target path information includes: The anchor user plane network element receives fourth indication information from a session management network element. The fourth indication information is used to indicate the anchor user plane network element to allocate the second path information to the terminal. The anchor user plane network element allocates the second path information to the terminal based on the fourth indication information. Correspondingly, that the anchor user plane network element associates the target path information with a target data packet processing policy specifically includes: The anchor user plane network element receives third indication information from the session management network element, where the third indication information is used to indicate the anchor user plane network element to associate the second path information with a first rule, and the first rule includes the first path information and the target data packet processing policy; and the anchor user plane network element associates the second path information with the first rule based on the third indication information. Alternatively, the anchor user plane network element receives a second rule from the session management network element, where the second rule includes the target data packet processing policy; and the anchor user plane network element associates the second path information with the second rule. Correspondingly, the path update method provided in this embodiment of this application further includes: The anchor user plane network element sends the second path information to the session management network element. According to this solution, the anchor user plane network element obtains the second path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is inserted, a corresponding user plane path can be updated in a timely manner on a premise that a data packet processing manner is not changed.

In the first aspect, the target path information is the first path information, and correspondingly, that a session management network element obtains target path information includes: The session management network element allocates the first path information to the terminal. Correspondingly, that the session management network element associates the target path information with a target data packet processing policy specifically includes: The session management network element generates a first rule based on the target data packet processing policy and the first path information. The first rule includes the target data packet processing policy and the first path information. Correspondingly, the path update method provided in this embodiment of this application further includes: The session management network element sends the first rule to the anchor user plane network element, and the session management network element sends the first path information to the access device. According to this solution, the anchor user plane network element obtains the first path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is deleted, a corresponding user plane path can be updated in a timely manner on a premise that a data packet processing manner is not changed.

In the first aspect, the target path information is the first path information, and correspondingly, that a session management network element obtains target path information includes: The session management network element allocates the first path information to the terminal. Correspondingly, that the session management network element associates the target path information with a target data packet processing policy specifically includes: The session management network element obtains a second rule corresponding to the second path information. The second rule includes the second path information and the target data packet processing policy. The session management network element associates the first path information with the second rule to obtain an updated second rule. Correspondingly, the path update method provided in this embodiment of this application further includes: The session management network element sends the updated second rule to the anchor user plane network element, and the session management network element sends the first path information to the access device. According to this solution, the anchor user plane network element obtains the first path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is deleted, a corresponding user plane path can be updated in a timely manner on a premise that a data packet processing manner is not changed.

In first aspect, the target path information is the first path information, and correspondingly, that an anchor user plane network element obtains target path information includes: The anchor user plane network element receives the first path information and fifth indication information from a session management network element. The fifth indication information is used to indicate the anchor user plane network element to associate the first path information with a second rule. The second rule includes the second path information and the target data packet processing policy. Correspondingly, that the anchor user plane network element associates the target path information with a target data packet processing policy specifically includes: The anchor user plane network element associates the first path information with the second rule based on the fifth indication information. According to this solution, the anchor user plane network element obtains the first path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is deleted, a corresponding user plane path can be updated in a timely manner on a premise that a data packet processing manner is not changed.

In first aspect, the target path information is the first path information, and correspondingly, that an anchor user plane network element obtains target path information includes: The anchor user plane network element receives sixth indication information from a session management network element. The sixth indication information is used to indicate the anchor user plane network element to allocate the first path information to the terminal. The anchor user plane network element allocates the first path information to the terminal based on the sixth indication information. Correspondingly, that the anchor user plane network element associates the target path information with a target data packet processing policy specifically includes: The anchor user plane network element receives fifth indication information from the session management network element, where the fifth indication information is used to indicate the anchor user plane network element to associate the first path information with a second rule, and the second rule includes the second path information and the target data packet processing policy; and the anchor user plane network element associates the first path information with the second rule based on the fifth indication information. Alternatively, the anchor user plane network element receives a first rule from the session management network element, where the first rule includes the target data packet processing policy; and the anchor user plane network element associates the first path information with the first rule. Correspondingly, the path update method provided in this embodiment of this application further includes: The anchor user plane network element sends the first path information to the session management network element. According to this solution, the anchor user plane network element obtains the first path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update method provided in this embodiment of this application, when the intermediate user plane network element is deleted, a corresponding user plane path can be updated in a timely manner on a premise that a data packet processing manner is not changed.

According to the invention, a path update method is provided. The method includes: An anchor user plane network element receives a request message from a session management network element. The request message is used to request the anchor user plane network element to allocate, to a terminal, first path information and second path information that are corresponding to the anchor user plane network element. The first path information is used to establish a first path between the anchor user plane network element and an access device, and the second path information is used to establish a second path between the anchor user plane network element and an intermediate user plane network element. The anchor user plane network element allocates, to the terminal based on the request message, the first path information and the second path information that are corresponding to the anchor user plane network element. The anchor user plane network element sends a response message to the session management network element. The response message carries the first path information and the second path information that are corresponding to the anchor user plane network element. According to this solution, the anchor user plane network element obtains both the first path information and the second path information that are corresponding to the anchor user plane network element, the first path information is used to establish the first path between the anchor user plane network element and the access device, and the second path information is used to establish the second path between the anchor user plane network element and the intermediate user plane network element, wherein the session establishment/modification request message carries a first rule and a second rule; storing, by the anchor use plane network element, the first rule and the second rule; allocating, by the anchor user plane network element to the terminal based on the request message, the first target path information and the second target path information that are corresponding to the anchor user plane network element; and sending , by the anchor user plane network element, a response message to the session management network element, wherein the response message carries the first target path information and the second target path information that are corresponding to the anchor user plane network element. Therefore, based on the path update method provided in this embodiment of this application, when the intermediate user plane network element is inserted or the intermediate user plane network element is deleted, a corresponding user plane path can be updated in a timely manner.

In the second aspect, the path update method provided in this embodiment of this application further includes: The anchor user plane network element receives indication information from the session management network element. The indication information is used by the anchor user plane network element to establish the first path or the second path. According to this solution, the anchor user plane network element can determine that the first path or the second path needs to be established.

According to a third aspect, a session management network element is provided. The session management network element has a function of implementing the method in any one of the first aspect, the fourth aspect, the sixth aspect, or the possible designs thereof. The function may be implemented by using hardware, or may be implemented by hardware executing corresponding software. The hardware or software includes one or more modules corresponding to the function.

According to a fourth aspect, an anchor user plane network element is provided. The anchor user plane network element has a function of implementing the method in of the second aspect. The function may be implemented by using hardware, or may be implemented by hardware executing corresponding software. The hardware or software includes one or more modules corresponding to the function.

### BRIEF DESCRIPTION OF DRAWINGS

FIG. 1 is a schematic architectural diagram of a path update system according to an embodiment of this application;
FIG. 2 is a schematic diagram of applying a path update system to a 5G system according to an embodiment of this application;
FIG. 3 is a schematic diagram of a hardware structure of a communications device according to an embodiment of this application;
FIG. 4 is a schematic flowchart 1 of a path update system according to an embodiment of this application;
FIG. 5 is a schematic flowchart 2 of a path update system according to an embodiment of this application;
FIG. 6 is a schematic flowchart 3 of a path update system according to an embodiment of this application;
FIG. 7 is a schematic flowchart 4 of a path update system not according to the invention;
FIG. 8 is a schematic flowchart 5 of a path update system not according to the invention;
FIG. 9 is a schematic flowchart 6 of a path update system not according to the invention;
FIG. 10 is a schematic flowchart 7 of a path update system not according to the invention;
FIG. 11 is a schematic flowchart 8 of a path update system not according to the invention;
FIG. 12 is a schematic flowchart 9 of a path update system not according to the invention;
FIG. 13 is a schematic flowchart 10 of a path update system not according to the invention;
FIG. 14 is a schematic flowchart 11 of a path update system not according to the invention;
FIG. 15 is a schematic flowchart 12 of a path update system not according to the invention;
FIG. 16 is a schematic flowchart 13 of a path update system not according to the invention;
FIG. 17 is a schematic flowchart 14 of a path update system not according to the invention;
FIG. 18 is a schematic flowchart 15 of a path update system not according to the invention;
FIG. 19 is a schematic flowchart 16 of a path update system not according to the invention;
FIG. 20 is a schematic flowchart 17 of a path update system not according to the invention;
FIG. 21 is a schematic flowchart 18 of a path update system not according to the invention;
FIG. 22 is a schematic flowchart 19 of a path update system not according to the invention;
FIG. 23 is a schematic flowchart 20 of a path update system not according to the invention;
FIG. 24 is a schematic flowchart 21 of a path update system not according to the invention;
FIG. 25 is a schematic structural diagram of a network device not according to the invention;
FIG. 26 is a schematic structural diagram of a session management network element according to an embodiment of this application; and
FIG. 27 is a schematic structural diagram of an anchor user plane network element according to an embodiment of this application.

### DESCRIPTION OF EMBODIMENTS

The following describes the technical solutions in the embodiments of this application with reference to the accompanying drawings in the embodiments of this application. In the descriptions in this application, unless otherwise specified, "/" indicates an "or" relationship between associated objects. For example, A/B may represent A or B. The term "and/or" in this application describes only an association relationship for describing associated objects and represents that three relationships may exist. For example, A and/or B may represent the following three cases: Only A exists, both A and B exist, and only B exists. A and B each may be in a singular or plural form. In addition, in the descriptions of this application, "a plurality of" means two or more than two unless otherwise specified. "The following at least one (item)" or a similar expression thereof means any combination of these items, including a singular (item) or any combination of a plural (items). For example, at least one (item) of a, b, or c may represent a; b; c; a and b; a and c; b and c; or a, b, and c, where a, b, and c each may be in a singular or plural form. In addition, for ease of clear description of the technical solutions in the embodiments of this application, terms such as "first" and "second" are used in the embodiments of this application to distinguish between same items having a basically same function and effect or similar items. A person skilled in the art can understand that the terms such as "first" and "second" are not used to limit a quantity and an execution sequence, and that the terms such as "first" and "second" are unnecessarily limited to be different.

In addition, the network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

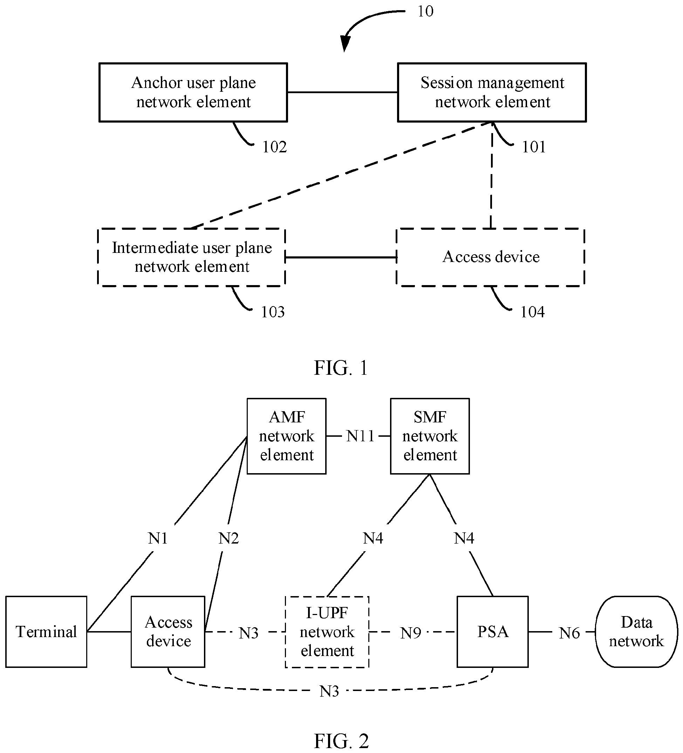

FIG. 1 shows a path update system 10 according to an embodiment of this application. The path update system 10 includes a session management network element 101 and an anchor user plane network element 102. The session management network element 101 and the anchor user plane network element 102 may communicate with each other directly, or may communicate with each other through forwarding performed by another device. This is not specifically limited in this embodiment of this application.

Optionally, in a possible implementation, the session management network element 101 is configured to: allocate, to a terminal, first path information and second path information that are corresponding to the anchor user plane network element 102, and determine a target data packet processing policy. The first path information is used to establish a first path between the anchor user plane network element 102 and an access device, and the second path information is used to establish a second path between the anchor user plane network element 102 and an intermediate user plane network element. The target data packet processing policy is used to process a data packet received from the first path and the second path.

The session management network element 101 is further configured to: generate a first rule based on the first path information and the target data packet processing policy, where the first rule includes the first path information and the target data packet processing policy; and generate a second rule based on the second path information and the target data packet processing policy, where the second rule includes the second path information and the target data packet processing policy.

The session management network element 101 is further configured to send the first rule and the second rule to the anchor user plane network element 102.

The anchor user plane network element 102 is configured to receive the first rule and the second rule from the session management network element 101.

Alternatively, optionally, in a possible implementation, the session management network element 101 is configured to: allocate, to a terminal, first path information and second path information that are corresponding to the anchor user plane network element 102, and determine a target data packet processing policy. The first path information is used to establish a first path between the anchor user plane network element 102 and an access device, and the second path information is used to establish a second path between the anchor user plane network element 102 and an intermediate user plane network element. The target data packet processing policy is used to process a data packet received from the first path and the second path.

The session management network element 101 is further configured to generate a third rule based on the first path information, the second path information, and the target data packet processing policy, where the third rule includes the first path information, the second path information, and the target data packet processing policy.

The session management network element 101 is further configured to send the third rule to the anchor user plane network element 102.

The anchor user plane network element 102 is configured to receive the third rule from the session management network element 101.

Alternatively, optionally, in a possible implementation, the session management network element 101 is configured to send second indication information to the anchor user plane network element 102, where the second indication information is used to indicate the anchor user plane network element 102 to allocate, to a terminal, first path information and second path information that are corresponding to the anchor user plane network element 102. The first path information is used to establish a first path between the anchor user plane network element 102 and an access device, and the second path information is used to establish a second path between the anchor user plane network element 102 and an intermediate user plane network element.

The anchor user plane network element 102 is configured to: receive the second indication information from the session management network element 102, and allocate, to the terminal based on the second indication information, the first path information and the second path information that are corresponding to the anchor user plane network element 102.

The session management network element 101 is configured to send a target data packet processing policy to the anchor user plane network element 102, where the target data packet processing policy is used to process a data packet received from the first path and the second path.

The anchor user plane network element 102 is further configured to: receive the target data packet processing policy from the session management network element 101, and associate the first path information and the second path information with the target data packet processing policy.

Optionally, the first path information and the second path information in this application and the following embodiments are associated with a same PDU session. A unified description is provided herein, and is not repeated below.

Based on the path update system provided in this embodiment of this application, the anchor user plane network element may obtain both the first path information and the second path information that are corresponding to the anchor user plane network element, and both the first path information and the second path information are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update system provided in this embodiment of this application, when the intermediate user plane network element is inserted or the intermediate user plane network element is deleted, a corresponding user plane path can be updated in a timely manner on a premise that a data packet processing manner is not changed.

Alternatively, optionally, as shown in FIG. 1, the path update system further includes an intermediate user plane network element 103.

In a possible implementation, the session management network element 101 is configured to: allocate, to a terminal, second path information corresponding to the anchor user plane network element 102, and generate a second rule based on a target data packet processing policy and the second path information, where the second rule includes the target data packet processing policy and the second path information. The second path information is used to establish a second path between the anchor user plane network element 102 and the intermediate user plane network element 103, the target data packet processing policy is used to process a data packet received from a first path and the second path, and the first path is a path between the anchor user plane network element 102 and an access device.

The session management network element 101 is further configured to send the second rule to the anchor user plane network element 102.

The anchor user plane network element 102 is further configured to receive the second rule from the session management network element 101.

The session management network element 101 is further configured to send the second path information to the intermediate user plane network element 103.

The intermediate user plane network element 103 is further configured to receive the second path information from the session management network element 101.

Alternatively, in a possible implementation, the session management network element 101 is configured to allocate, to a terminal, second path information corresponding to the anchor user plane network element 102, where the second path information is used to establish a second path between the anchor user plane network element 102 and the intermediate user plane network element 103.

The session management network element 101 is further configured to obtain a first rule corresponding to first path information, where the first rule includes the first path information and a target data packet processing policy. The first path information is used to establish a first path between the anchor user plane network element 102 and an access device, and the target data packet processing policy is used to process a data packet received from the first path and the second path.

The session management network element 101 is further configured to: associate the second path information with the first rule to obtain an updated first rule, and send the updated first rule to the anchor user plane network element 102.

The anchor user plane network element 102 is further configured to receive the updated first rule from the session management network element 101.

The session management network element 101 is further configured to send the second path information to the intermediate user plane network element 103.

The intermediate user plane network element 103 is further configured to receive the second path information from the session management network element 101.

Alternatively, in a possible implementation, the session management network element 101 is configured to allocate, to a terminal, second path information corresponding to the anchor user plane network element 102, where the second path information is used to establish a second path between the anchor user plane network element 102 and the intermediate user plane network element 103.

The session management network element 101 is further configured to send the second path information and third indication information to the anchor user plane network element 102, where the third indication information is used to indicate the anchor user plane network element 102 to associate the second path information with a first rule. The first rule includes first path information and a target data packet processing policy, the first path information is used to establish a first path between the anchor user plane network element 102 and an access device, and the target data packet processing policy is used to process a data packet received from the first path and the second path.

The anchor user plane network element 102 is configured to: receive the second path information and the third indication information from the session management network element 101, and associate the second path information with the first rule based on the third indication information.

The session management network element 101 is further configured to send the second path information to the intermediate user plane network element 103.

The intermediate user plane network element 103 is further configured to receive the second path information from the session management network element 101.

Alternatively, in a possible implementation, the session management network element 101 is configured to send fourth indication information to the anchor user plane network element 102, where the fourth indication information is used to indicate the anchor user plane network element 102 to allocate, to a terminal, second path information corresponding to the anchor user plane network element 102, and the second path information is used to establish a second path between the anchor user plane network element 102 and the intermediate user plane network element 103.

The anchor user plane network element 102 is configured to: receive the fourth indication information from the session management network element 101, and allocate, to the terminal based on the fourth indication information, the second path information corresponding to the anchor user plane network element 102.

The session management network element 101 is further configured to send third indication information to the anchor user plane network element 102, where the third indication information is used to indicate the anchor user plane network element 102 to associate the second path information with a first rule. The first rule includes first path information and a target data packet processing policy, the first path information is used to establish a first path between the anchor user plane network element 102 and an access device, and the target data packet processing policy is used to process a data packet received from the first path and the second path.

The anchor user plane network element 102 is further configured to: receive the third indication information from the session management network element 101, and associate the second path information with the first rule based on the third indication information.

The anchor user plane network element 102 is further configured to send the second path information to the session management network element 101.

The session management network element 101 is further configured to receive the second path information from an anchor session management network element.

The session management network element 101 is further configured to send the second path information to the intermediate user plane network element 103.

The intermediate user plane network element 103 is further configured to receive the second path information from the session management network element 101.

Alternatively, in a possible implementation, the session management network element 101 is configured to send fourth indication information to the anchor user plane network element 102, where the fourth indication information is used to indicate the anchor user plane network element 102 to allocate, to a terminal, second path information corresponding to the anchor user plane network element 102, and the second path information is used to establish a second path between the anchor user plane network element 102 and the intermediate user plane network element 103.

The anchor user plane network element 102 is configured to: receive the fourth indication information from the session management network element 101, and allocate, to the terminal based on the fourth indication information, the second path information corresponding to the anchor user plane network element 102.

The session management network element 101 is further configured to send a second rule to the anchor user plane network element 102, where the second rule includes a target data packet processing policy, the target data packet processing policy is used to process a data packet received from a first path and the second path, and the second path is a path between the anchor user plane network element 102 and an access device.

The anchor user plane network element 102 is configured to: receive the second rule from the session management network element 101, and associate the second path information with the second rule.

The anchor user plane network element 102 is further configured to send the second path information to the session management network element 101.

The session management network element 101 is further configured to receive the second path information from an anchor session management network element.

The session management network element 101 is further configured to send the second path information to the intermediate user plane network element 103.

The intermediate user plane network element 103 is further configured to receive the second path information from the session management network element 101.

Based on the path update system provided in this embodiment of this application, the anchor user plane network element may obtain the second path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update system provided in this embodiment of this application, when the intermediate user plane network element is inserted, a corresponding user plane path can be updated in a timely manner on a premise that a data packet processing manner is not changed.

Alternatively, optionally, as shown in FIG. 1, the path update system further includes an access device 104.

In a possible implementation, the session management network element 101 is configured to: allocate, to a terminal, first path information corresponding to the anchor user plane network element 102, and generate a first rule based on a target data packet processing policy and the first path information, where the first rule includes the target data packet processing policy and the first path information. The first path information is used to establish a first path between the anchor user plane network element 102 and the access device 104, the target data packet processing policy is used to process a data packet received from the first path and a second path, and the second path is a path between the anchor user plane network element 102 and an intermediate user plane network element.

The session management network element 101 is further configured to send the first rule to the anchor user plane network element 102.

The anchor user plane network element 102 is further configured to receive the first rule from the session management network element 101.

The session management network element 101 is further configured to send the first path information to the access device 104.

The access device 104 is further configured to receive the first path information from the session management network element 101.

Alternatively, in a possible implementation, the session management network element 101 is configured to allocate, to a terminal, first path information corresponding to the anchor user plane network element 102, where the first path information is used to establish a first path between the anchor user plane network element 102 and the access device 104.

The session management network element 101 is further configured to obtain a second rule corresponding to second path information, where the second rule includes the second path information and a target data packet processing policy. The second path information is used to establish a second path between the anchor user plane network element 102 and an intermediate user plane network element, and the target data packet processing policy is used to process a data packet received from the first path and the second path.

The session management network element 101 is further configured to: associate the first path information with the second rule to obtain an updated second rule, and send the updated second rule to the anchor user plane network element 102.

The anchor user plane network element 102 is further configured to receive the updated second rule from the session management network element 101.

The session management network element 101 is further configured to send the first path information to the access device 104.

The access device 104 is further configured to receive the first path information from the session management network element 101.

Alternatively, in a possible implementation, the session management network element 101 is configured to allocate, to a terminal, first path information corresponding to the anchor user plane network element 102, where the first path information is used to establish a first path between the anchor user plane network element 102 and the access device 104.

The session management network element 101 is further configured to send the first path information and fifth indication information to the anchor user plane network element 102, where the fifth indication information is used to indicate the anchor user plane network element 102 to associate the first path information with a second rule, and the second rule includes second path information and a target data packet processing policy. The second path information is used to establish a second path between the anchor user plane network element 102 and an intermediate user plane network element, and the target data packet processing policy is used to process a data packet received from the first path and the second path.

The anchor user plane network element 102 is configured to: receive the first path information and the fifth indication information from the session management network element 101, and associate the first path information with the second rule based on the fifth indication information.

The session management network element 101 is further configured to send the first path information to the access device 104.

The access device 104 is further configured to receive the first path information from the session management network element 101.

Alternatively, in a possible implementation, the session management network element 101 is configured to send sixth indication information to the anchor user plane network element 102, where the sixth indication information is used to indicate the anchor user plane network element 102 to allocate, to a terminal, first path information corresponding to the anchor user plane network element 102, and the first path information is used to establish a first path between the anchor user plane network element 102 and the access device 104.

The anchor user plane network element 102 is configured to: receive the sixth indication information from the session management network element 101, and allocate, to the terminal based on the sixth indication information, the first path information corresponding to the anchor user plane network element 102.

The session management network element 101 is further configured to send fifth indication information to the anchor user plane network element 102, where the fifth indication information is used to indicate the anchor user plane network element 102 to associate the first path information with a second rule, and the second rule includes second path information and a target data packet processing policy. The second path information is used to establish a second path between the anchor user plane network element 102 and an intermediate user plane network element, and the target data packet processing policy is used to process a data packet received from the first path and the second path.

The anchor user plane network element 102 is further configured to: receive the fifth indication information from the session management network element 101, and associate the first path information with the second rule based on the fifth indication information.

The anchor user plane network element 102 is further configured to send the first path information to the session management network element 101.

The session management network element 101 is further configured to receive the first path information from an anchor session management network element.

The session management network element 101 is further configured to send the first path information to the access device 104.

The access device 104 is further configured to receive the first path information from the session management network element 101.

Alternatively, in a possible implementation, the session management network element 101 is configured to send sixth indication information to the anchor user plane network element 102, where the sixth indication information is used to indicate the anchor user plane network element 102 to allocate, to a terminal, first path information corresponding to the anchor user plane network element 102, and the first path information is used to establish a first path between the anchor user plane network element 102 and the access device 104.

The anchor user plane network element 102 is configured to: receive the sixth indication information from the session management network element 101, and allocate, to the terminal based on the sixth indication information, the first path information corresponding to the anchor user plane network element 102.

The session management network element 101 is further configured to send a first rule to the anchor user plane network element 102, where the first rule includes a target data packet processing policy, the target data packet processing policy is used to process a data packet received from the first path and a second path, and the second path is a path between the anchor user plane network element 102 and an intermediate user plane network element.

The anchor user plane network element 102 is configured to: receive the first rule from the session management network element 101, and associate the first path information with the first rule.

The anchor user plane network element 102 is further configured to send the first path information to the session management network element 101.

The session management network element 101 is further configured to receive the first path information from an anchor session management network element.

The session management network element 101 is further configured to send the first path information to the access device 104.

The access device 104 is further configured to receive the first path information from the session management network element 101.

Based on the path update system provided in this embodiment of this application, the anchor user plane network element may obtain the first path information corresponding to the anchor user plane network element, and both the first path information and the second path information that are corresponding to the anchor user plane network element are associated with the target data packet processing policy; the first path information is used to establish the first path between the anchor user plane network element and the access device, and the second path information is used to establish the second path between the anchor user plane network element and the intermediate user plane network element; and the target data packet processing policy is used to process the data packet received from the first path and the second path. Therefore, based on the path update system provided in this embodiment of this application, when the intermediate user plane network element is deleted, a corresponding user plane path can be updated in a timely on a premise that a data packet processing manner is not changed.

Alternatively, optionally, in a possible implementation, the session management network element 101 is configured to allocate, to a terminal, first path information and second path information that are corresponding to the anchor user plane network element 102, where the first path information is used to establish a first path between the anchor user plane network element 102 and the access device, and the second path information is used to establish a second path between the anchor user plane network element 102 and an intermediate user plane network element.

The session management network element 101 is further configured to send the first path information and the second path information to the anchor user plane network element 102.

The anchor user plane network element 102 is further configured to receive the first path information and the second path information from the session management network element 101.

In another possible implementation, the session management network element 101 is configured to send a request message to the anchor user plane network element 102, where the request message is used to request the anchor user plane network element 102 to allocate, to a terminal, first path information and second path information that are corresponding to the anchor user plane network element 102; and the first path information is used to establish a first path between the anchor user plane network element 102 and the access device, and the second path information is used to establish a second path between the anchor user plane network element 102 and an intermediate user plane network element.

The anchor user plane network element 102 is configured to: receive the request message from the session management network element 101, and allocate, to the terminal based on the request message, the first path information and the second path information that are corresponding to the anchor user plane network element 102.

The anchor user plane network element 102 is further configured to send a response message to the session management network element 101, where the response message carries the first path information and the second path information that are corresponding to the anchor user plane network element 102.

The session management network element 101 is configured to receive, from the anchor user plane network element 102, the first path information and the second path information that are corresponding to the anchor user plane network element 102.

Based on the path update system provided in this embodiment of this application, the anchor user plane network element may obtain both the first path information and the second path information that are corresponding to the anchor user plane network element, the first path information is used to establish the first path between the anchor user plane network element and the access device, and the second path information is used to establish the second path between the anchor user plane network element and the intermediate user plane network element. Therefore, based on the path update system provided in this embodiment of this application, when the intermediate user plane network element is inserted or the intermediate user plane network element is deleted, a corresponding user plane path can be updated in a timely manner.

Alternatively, optionally, in a possible implementation, the session management network element 101 is configured to allocate, to a terminal, path information corresponding to the anchor user plane network element 102, where the path information is used to establish a first path between the anchor user plane network element 102 and the access device and a second path between the anchor user plane network element 102 and an intermediate user plane network element.

The session management network element 101 is further configured to send the path information to the anchor user plane network element 102.

The anchor user plane network element 102 is configured to receive the path information from the session management network element 101.

In another possible implementation, the session management network element 101 is configured to send a request message to the anchor user plane network element 102, where the request message is used to request the anchor user plane network element 102 to allocate, to a terminal, path information corresponding to the anchor user plane network element 102; and the path information is used to establish a first path between the anchor user plane network element 102 and the access device and a second path between the anchor user plane network element 102 and an intermediate user plane network element.

The anchor user plane network element 102 is configured to: receive the request message from the session management network element 101, and allocate, to the terminal based on the request message, the path information corresponding to the anchor user plane network element 102.

The anchor user plane network element 102 is further configured to send a response message to the session management network element 101, where the response message carries the path information corresponding to the anchor user plane network element 102.

The session management network element 101 is further configured to receive the response message from the anchor user plane network element 102.

Based on the path update system provided in this embodiment of this application, the anchor user plane network element may obtain the path information that is used to establish the first path between the anchor user plane network element and the access device and the second path between the anchor user plane network element and the intermediate user plane network element. Therefore, based on the path update system provided in this embodiment of this application, when the intermediate user plane network element is inserted or the intermediate user plane network element is deleted, a corresponding user plane path can be updated in a timely manner.

Alternatively, optionally, in a possible implementation, the session management network element 101 is configured to allocate, to a terminal, first target path information corresponding to the anchor user plane network element 102, where the first target path information includes first path information or second path information; and the first path information is used to establish a first path between the anchor user plane network element 102 and the access device, and the second path information is used to establish a second path between the anchor user plane network element 102 and an intermediate user plane network element.

The session management network element 101 is further configured to send the first target path information to the anchor user plane network element 102, where the first target path information is used to update second target path information. When the first target path information is the first path information, the second target path information is the second path information; or when the first target path information is the second path information, the second target path information is the first path information.

The anchor user plane network element 102 is configured to: receive the first target path information from the session management network element 101, and update the second target path information to the first target path information.

In another possible implementation, the session management network element 101 is configured to send a request message to the anchor user plane network element 102, where the request message is used to request the anchor user plane network element 102 to allocate, to a terminal, first target path information corresponding to the anchor user plane network element 102; the first target path information includes first path information or second path information; and the first path information is used to establish a first path between the anchor user plane network element 102 and the access device, and the second path information is used to establish a second path between the anchor user plane network element 102 and an intermediate user plane network element.

The anchor user plane network element 102 is configured to: receive the request message from the session management network element 101, and allocate, to the terminal based on the request message, the first target path information corresponding to the anchor user plane network element 102.

The anchor user plane network element 102 is further configured to update second target path information to the first target path information. When the first target path information is the first path information, the second target path information is the second path information; or when the first target path information is the second path information, the second target path information is the first path information.

The anchor user plane network element 102 is further configured to send a response message to the session management network element, where the response message carries the first target path information.

Based on the path update system provided in this embodiment of this application, when the intermediate user plane network element is inserted or the intermediate user plane network element is deleted, the anchor user plane network element may obtain the corresponding first target path information, and update the second target path information based on the first target path information. Therefore, based on the path update system provided in this embodiment of this application, when the intermediate user plane network element is inserted or the intermediate user plane network element is deleted, a corresponding user plane path can be updated in a timely manner.

Optionally, the path update system 10 shown in FIG. 1 can be applied to an existing 5G network or a future another network. This is not specifically limited in this embodiment of this application.

For example, it is assumed that the path update system 10 shown in FIG. 1 is applied to the existing 5G network. As shown in FIG. 2, a network element or an entity corresponding to the session management network element in FIG. 1 may be an SMF network element in the 5G network; a network element or an entity corresponding to the anchor user plane network element in FIG. 1 may be a PSA in the 5G network; a network element or an entity corresponding to the intermediate user plane network element in FIG. 1 may be an I-UPF network element in the 5G network; and a network element or an entity corresponding to the access device in FIG. 1 may be an access device in the 5G network.

In addition, as shown in FIG. 2, the 5G network may further include an access and mobility management function (access and mobility management function, AMF) network element or the like. For details, reference may be to an existing 5G network architecture. Details are not described herein.

The terminal is connected to a network through the access device, and communicates with the AMF network element through a next generation (next generation, N) network interface 1 (referred to as N1 for short). The access device communicates with the AMF network element through an N2 interface (referred to as N2 for short), and communicates with the I-UPF network element or the PSA through an N3 interface (referred to as N3 for short). The I-UPF network element communicates with the PSA through an N9 interface (referred to as N9 for short). The SMF network element communicates with the I-UPF network element or the PSA through an N4 interface (referred to as N4 for short). The AMF network element communicates with the SMF network element through an N11 interface (referred to as N11 for short). The PSA is connected to a data network through an N6 interface (referred to as N6 for short).

It should be noted that names of the interfaces between the network elements in FIG. 2 are merely examples, and the interface names during specific implementation may be other names. This is not specifically limited in this embodiment of this application.

In addition, it should be noted that control plane network elements such as the AMF network element and the SMF network element in the 5G network shown in FIG. 2 may alternatively interact with each other through a service-oriented interface. For example, a service-oriented interface externally provided by the AMF network element may be Namf, and a service-oriented interface externally provided by the SMF network element may be Nsmf. For related descriptions, reference may be made to a 5G system architecture (5G system architecture) diagram in the 23.501 standard. Details are not described herein.

It should be noted that, the access device, the SMF network element, the AMF network element, the SMF network element, the I-UPF network element, the PSA, or the like in FIG. 2 is merely a name, and the name does not constitute any limitation on the device itself. In the 5G network and the future another network, the network element or the entity corresponding to the access device, the SMF network element, the AMF network element, the SMF network element, the I-UPF network element, the PSA, or the like may have other names. This is not specifically limited in this embodiment of this application. For example, the I-UPF network element may be replaced with an I-UPF, an I-UPF entity, or the like. A unified description is provided herein, and is not repeated below.

Optionally, terminals (terminal) in this embodiment of this application may include various devices: a handheld device, a vehicle-mounted device, a wearable device, and a computing device that have a wireless communication function, and another processing device connected to a wireless modem. The terminals may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, and the like. The relay user equipment may be, for example, a 5G home gateway (residential gateway, RG). For ease of description, the devices mentioned above are collectively referred to as a terminal in this application.

Optionally, the access device in this embodiment of this application is a device connected to a core network. For example, the access device may be a base station, a broadband network gateway (broadband network gateway, BNG), an aggregation switch, or a non-3rd generation partnership project (3rd generation partnership project, 3GPP) access device. The base station may include stations in various forms, such as a macro base station, a micro base station (also referred to as a small cell), a relay node, an access point, and the like.

Optionally, the session management network element or the anchor user plane network element in FIG. 1 in this embodiment of this application may be implemented by one device, may be implemented by a plurality of devices together, or may be a functional module in one device. This is not specifically limited in this embodiment of this application. It can be understood that the function may be a network element in a hardware device, may be a software function running on special-purpose hardware, or may be a virtualization function instantiated on a platform (for example, a cloud platform).

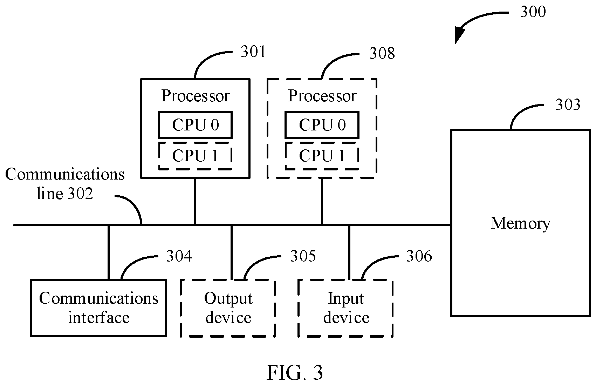

For example, the session management network element or the anchor user plane network element in FIG. 1 in this embodiment of this application may be implemented by a communications device in FIG. 3. FIG. 3 is a schematic diagram of a hardware structure of the communications device according to an embodiment of this application. The communications device 300 includes a processor 301, a communications line 302, a memory 303, and at least one communications interface (which is described only by using a communications interface 304 as an example in FIG. 3).

The processor 301 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communications line 302 may include a path for transmitting information between the foregoing components.

The communications interface 304 uses any apparatus such as a transceiver to communicate with another device or a communications network, such as an Ethernet network, a radio access network (radio access network, RAN), or a wireless local area network (wireless local area networks, WLAN).

The memory 303 may be a read-only memory (read-only memory, ROM), another type of static storage device that can store static information and an instruction, a random access memory (random access memory, RAM), or another type of dynamic storage device that can store information and an instruction; or may be an electrically erasable programmable read-only memory (electrically erasable programmable read-only memory, EEPROM), a compact disc read-only memory (compact disc read-only memory, CD-ROM), other optical disk storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of an instruction or a data structure and that can be accessed by a computer. However, no limitation is imposed thereto. The memory may exist independently, and is connected to the processor through the communications line 302. Alternatively, the memory may be integrated with the processor.

The memory 303 is configured to store a computer executable instruction for performing the solutions in this application, and the processor 301 controls execution of the solutions. The processor 301 is configured to execute the computer executable instruction stored in the memory 303, to implement path update methods provided in the following embodiments of this application.

Optionally, the computer executable instruction in this embodiment of this application may also be referred to as application program code. This is not specifically limited in this embodiment of this application.

During specific implementation, in an embodiment, the processor 301 may include one or more CPUs, for example, a CPU 0 and a CPU 1 in FIG. 3.

During specific implementation, in an embodiment, the communications device 300 may include a plurality of processors, for example, the processor 301 and a processor 308 in FIG. 3. Each of the processors may be a single-core processor (single-CPU), or may be a multi-core processor (multi-CPU). The processors herein may be one or more devices, circuits, and/or processing cores for processing data (for example, a computer program instruction).

During specific implementation, in an embodiment, the communications device 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive a user input in a plurality of manners. For example, the input device 306 may be a mouse, a keyboard, a touchscreen device, or a sensing device.

The communications device 300 may be a general-purpose device or a special-purpose device. During specific implementation, the communications device 300 may be a desktop computer, a portable computer, a network server, a personal digital assistant (personal digital assistant, PDA), a mobile phone, a tablet computer, a wireless terminal device, an embedded device, or a device with a structure similar to the structure in FIG. 3. A type of the communications device 300 is not limited in this embodiment of this application.

With reference to FIG. 1 to FIG. 3, the following details the path update methods provided in the embodiments of this application.

It should be noted that names of messages between the network elements, names of parameters in the messages, or the like in the following embodiments of this application are merely examples, and the names thereof may be other names during specific implementation. This is not specifically limited in the embodiments of this application.

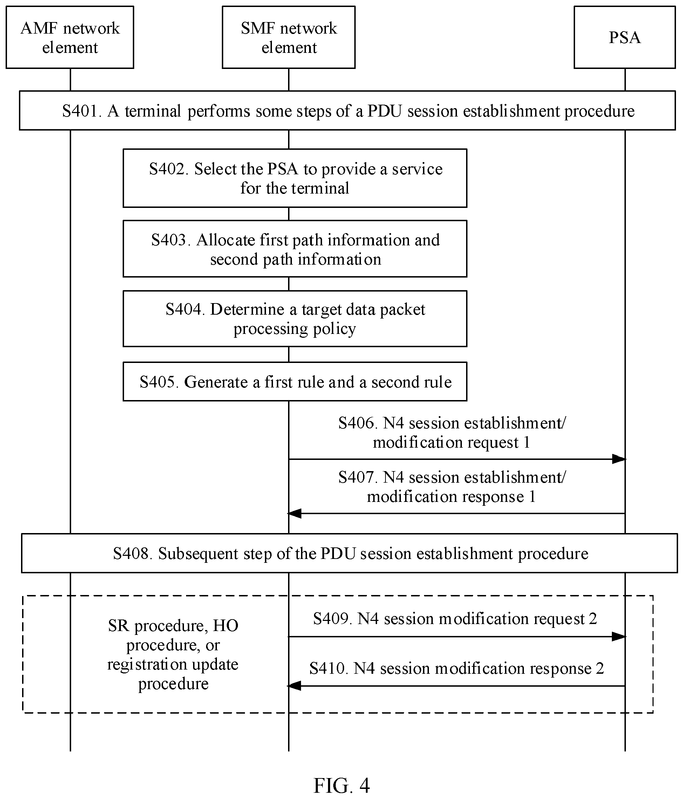

First, that the path update system shown in FIG. 1 is applied to the 5G network shown in FIG. 2 is used as an example. FIG. 4 shows a path update method according to an embodiment of this application. The path update method includes the following steps.

S401. A terminal performs some steps of a PDU session establishment procedure, including interaction between network elements such as the terminal, an AMF network element, an SMF network element, a unified data management (unified data management, UDM) network element, and a policy control function (policy control function, PCF) network element, and other steps. For details, reference may be made to an existing PDU session establishment procedure. Details are not described herein.

S402. The SMF network element selects a PSA to provide a service for the terminal.

For a specific implementation of selecting, by the SMF network element, a PSA to provide a service for the terminal, reference may be made to an existing implementation. Details are not described herein.

S403. The SMF network element allocates, to the terminal, first path information and second path information that are corresponding to the PSA.

The first path information is used to establish a first path between the PSA and an access device, and the second path information is used to establish a second path between the PSA and an I-UPF network element.

Optionally, the first path information and the second path information in this embodiment of this application may be collectively referred to as core-network path information; or the first path information may be referred to as N3 path information, and the second path information may be referred to as N9 path information; or the like. This is not specifically limited in this embodiment of this application.

In addition, a path in this embodiment of this application may be replaced with a tunnel. For example, the core-network path information may also be referred to as core-network tunnel information, the N3 path information may also be referred to as N3 tunnel information, and the N9 path information may also be referred to as N9 tunnel information. This is not specifically limited in this embodiment of this application.

Optionally, the core-network path information in this embodiment of this application may include an internet protocol (internet protocol, IP) address and a tunnel endpoint identifier (tunnel endpoint identifier, TEID). For example, the N3 path information may include an IP address 1 and a TEID 1, and the N9 path information may include an IP address 2 and a TEID2. The TEID 1 may be the same as the TEID2, and the IP address 1 is different from the IP address 2. Alternatively, the TEID 1 is different from the TEID2, and the IP address 1 is different from the IP address 2. Alternatively, the TEID 1 is the same as the TEID2, and the IP address 1 is the same as the IP address 2. This is not specifically limited in this embodiment of this application.

In this embodiment of this application, the IP address 1 may be, for example, an IP version 4 (IP version 4, IPv4) address, and the IP address 2 may be, for example, an IP version 6 (IP version 4, IPv6) address; or the IP address 1 may be, for example, an IPv4 address 1, and the IP address 2 may be, for example, an IPv4 address 2; or the IP address 1 may be, for example, an IPv6 address 1, and the IP address 2 may be, for example, an IPv6 address 2. This is not specifically limited in this embodiment of this application.

Optionally, in this embodiment of this application, the following translation relationship exists between an IPv4 and an IPv6: IPv6 prefix (prefix) + IPv4 address = IPv6 address. A unified description is provided herein. This is not specifically limited in this embodiment of this application.

S404. The SMF network element determines a target data packet processing policy, where the target data packet processing policy is used to process a data packet received from the first path and the second path.

Optionally, in this embodiment of this application, that the SMF network element determines a target data packet processing policy may specifically be: The SMF network element allocates the target data packet processing policy that is corresponding to the first path information and the second path information.

S405. The SMF network element generates a first rule based on the first path information and the target data packet processing policy, and the SMF network element generates a second rule based on the second path information and the target data packet processing policy.

The first rule includes the first path information and the target data packet processing policy, and the second rule includes the second path information and the target data packet processing policy.

Optionally, in this embodiment of this application, the first rule may be, for example, a first packet detection rule (packet detection rule, PDR), and the second rule may be, for example, a second PDR.

For related formats or functions of a PDR and a FAR, reference may be made to prior-art descriptions. Details are not described herein.

S406. The SMF network element sends an N4 session establishment/modification request 1 to the PSA, so that the PSA receives the N4 session establishment/modification request 1 from the SMF network element.

The N4 session establishment/modification request 1 carries the first rule and the second rule. The second path information in the second rule is used by the PSA to use the corresponding second path information to establish the second path when the I-UPF network element is inserted in a subsequent procedure such as an SR procedure, an HO procedure, or a registration update procedure. The first path information in the first rule is used by the PSA to use the corresponding first path information to establish the first path when the I-UPF network element is deleted in a subsequent procedure such as an SR procedure, an HO procedure, or a registration update procedure. The target data packet processing policy in the first rule and the second rule is used to process the data packet received from the first path and the second path.

Because both the first path information and the second path information are associated with a same target data packet processing policy in this embodiment of this application, it can be ensured that the PSA performs, when the path information changes, same processing on the data packet corresponding to the terminal, for example, performs same classification, forwarding, or detection processing.

According to the application's invention, after receiving the N4 session establishment/modification request from the SMF network element, the PSA stores the first rule and the second rule.

Optionally, the N4 session establishment/modification request 1 may further carry first indication information, and the first indication information is used to indicate the PSA to establish the first path or the second path. This is not specifically limited in this embodiment of this application.

S407. The PSA sends an N4 session establishment/modification response 1 to the SMF network element, so that the SMF network element receives the N4 session establishment/modification response 1 from the PSA.

S408. Perform a subsequent step of the PDU session establishment procedure.

For a subsequent PDU session establishment procedure, reference may be made to an existing implementation. Details are not described herein.

Optionally, the path update method provided in this embodiment of this application further includes the following steps S409 and S410.

S409. During an SR procedure, an HO procedure, or a registration update procedure, if the I-UPF network element is inserted or deleted, the SMF network element sends an N4 session modification request 2 to the PSA, so that the PSA receives the N4 session modification request 2 from the SMF network element.

The N4 session modification request 2 carries the first indication information, and the first indication information is used to indicate the PSA to establish the first path or the second path.

Optionally, the first indication information in this embodiment of this application may be an explicit instruction, or may be implicit indication information. For example, when the SMF network element notifies path information of the I-UPF network element to the PSA, it may imply an instruction to establish the second path (namely, an N9 tunnel). This is not specifically limited in this embodiment of this application.

In addition, for an N2 HO procedure, the first indication information is carried by using the N4 session modification request 2 at a preparation stage. A unified description is provided herein, and is not repeated below.

Optionally, in this embodiment of this application, if the first indication information is used to indicate to establish the first path, the PSA may establish the first path based on the first indication information based on the first path information in the first rule after receiving the N4 session modification request 2 from the SMF network element. Alternatively, if the first indication information is used to indicate to establish the second path, the PSA may establish the second path based on the first indication information based on the second path information in the second rule after receiving the N4 session modification request 2 from the SMF network element. This is not specifically limited in this embodiment of this application.

S410. The PSA sends an N4 session modification response 2 to the SMF network element, so that the SMF network element receives the N4 session modification response 2 from the PSA.

It should be noted that only two steps in the SR procedure, the HO procedure, or the registration update procedure are described in this embodiment of this application, and certainly other steps may alternatively be included in the SR procedure, the HO procedure, or the registration update procedure. For details, reference may be made to an existing SR procedure, HO procedure, or registration update procedure. Details are not described herein.

In addition, it should be noted that the HO procedure in this embodiment of this application may specifically be an Xn handover (Xn handover) procedure or an N2 handover (N2 handover) procedure. This is not specifically limited in this embodiment of this application.

Based on the path update method provided in this embodiment of this application, when the I-UPF network element is inserted or the I-UPF network element is deleted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S401 to S410 may be performed by the processor 301 in the communications device 300 shown in FIG. 3 by invoking application program code stored in the memory 303. No limitation is imposed thereto in this embodiment of this application.

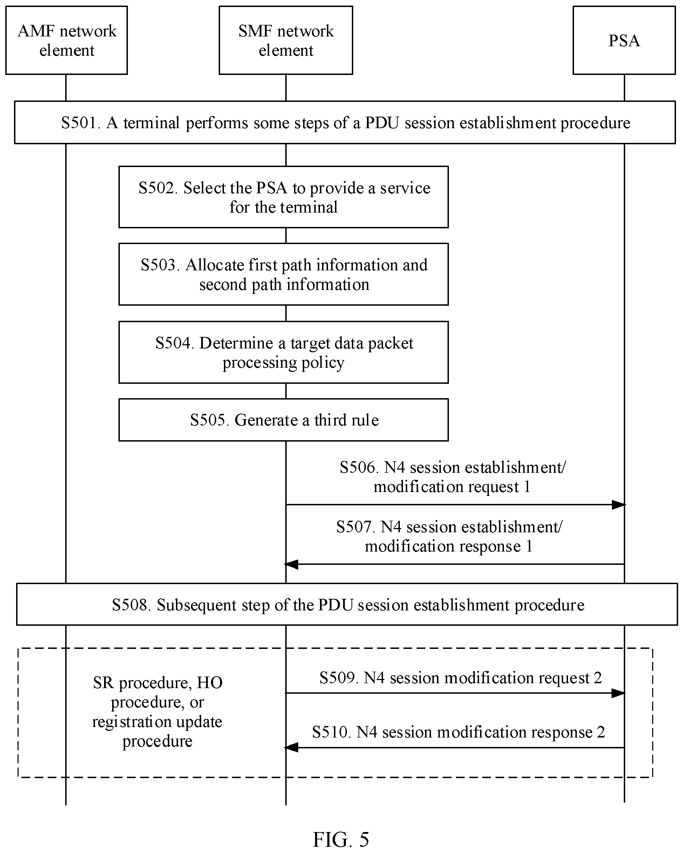

Optionally, that the path update system shown in FIG. 1 is applied to the 5G network shown in FIG. 2 is used as an example. FIG. 5 shows a path update method according to an embodiment of this application. The path update method includes the following steps.

S501 to S504 are respectively the same as steps S401 to S404. For related descriptions, reference may be made to the embodiment shown in FIG. 4. Details are not described herein again.

S505. The SMF network element generates a third rule based on the first path information, the second path information, and the target data packet processing policy.

The third rule includes the first path information, the second path information, and the target data packet processing policy.

Optionally, the third rule in this embodiment of this application may be, for example, a third PDR. This is not specifically limited in this embodiment of this application.

For related formats or functions of a PDR and a FAR, reference may be made to prior-art descriptions. Details are not described herein.

S506. The SMF network element sends an N4 session establishment/modification request 1 to the PSA, so that the PSA receives the N4 session establishment/modification request 1 from the SMF network element.

The N4 session establishment/modification request 1 carries the third rule. The second path information in the third rule is used by the PSA to use the corresponding second path information to establish the second path when the I-UPF network element is inserted in a subsequent procedure such as an SR procedure or an HO procedure. The first path information in the third rule is used by the PSA to use the corresponding first path information to establish the first path when the I-UPF network element is deleted in a subsequent procedure such as an SR procedure, an HO procedure, or a registration update procedure. The target data packet processing policy in the third rule is used to process the data packet received from the first path and the second path.

Because both the first path information and the second path information are associated with a same target data packet processing policy in this embodiment of this application, it can be ensured that the PSA performs, when the path information changes, same processing on the data packet corresponding to the terminal, for example, performs same classification, forwarding, or detection processing.

Optionally, in this embodiment of this application, after receiving the N4 session establishment/modification request from the SMF network element, the PSA may store the third rule. This is not specifically limited in this embodiment of this application.

Optionally, the N4 session establishment/modification request 1 may further carry first indication information, and the first indication information is used to indicate the PSA to establish the first path or the second path. This is not specifically limited in this embodiment of this application.

S507 to S510 are respectively the same as steps S407 to S410. For related descriptions, reference may be made to the embodiment shown in FIG. 4. Details are not described herein again.

Based on the path update method provided in this embodiment of this application, when the I-UPF network element is inserted or the I-UPF network element is deleted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S501 to S510 may be performed by the processor 301 in the communications device 300 shown in FIG. 3 by invoking application program code stored in the memory 303. No limitation is imposed thereto in this embodiment of this application.

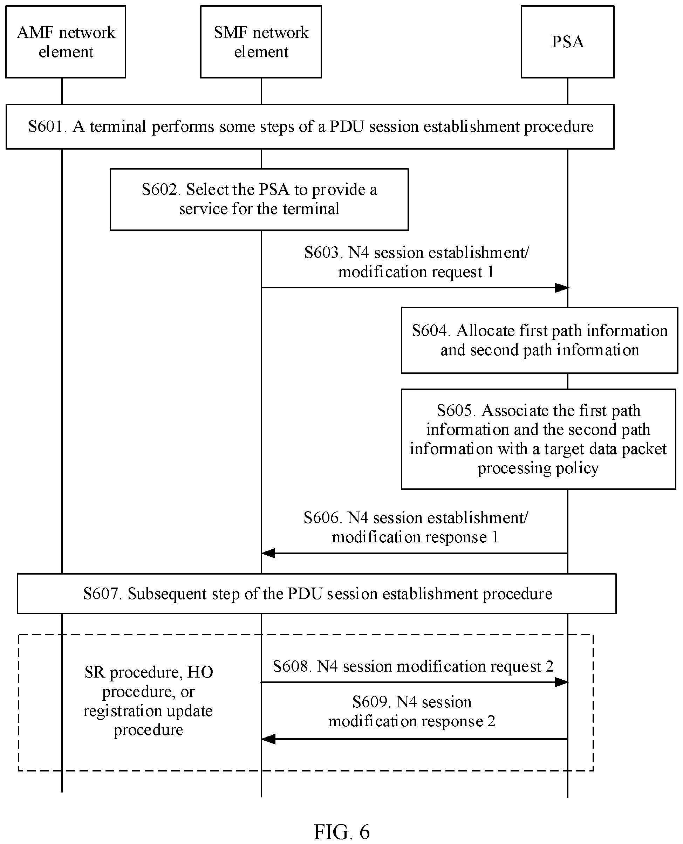

Optionally, that the path update system shown in FIG. 1 is applied to the 5G network shown in FIG. 2 is used as an example. FIG. 6 shows a path update method according to an embodiment of this application. The path update method includes the following steps.

S601 and S602 are respectively the same as steps S401 and S402. For related descriptions, reference may be made to the embodiment shown in FIG. 4. Details are not described herein again.

S603. The SMF network element sends an N4 session establishment/modification request 1 to the PSA, so that the PSA receives the N4 session establishment/modification request 1 from the SMF network element.

The N4 session establishment/modification request 1 carries second indication information, and the second indication information is used to indicate the PSA to allocate, to the terminal, first path information and second path information that are corresponding to the PSA. For related descriptions of the first path information and the second path information, reference may be made to the embodiment shown in FIG. 4. Details are not described herein again.

Optionally, in a possible implementation, the N4 session establishment/modification request 1 further carries a first rule and a second rule, where both the first rule and the second rule include a target data packet processing policy, and the target data packet processing policy is used to process a data packet received from the first path and the second path.

Alternatively, optionally, in a possible implementation, the N4 session establishment/modification request 1 further carries a third rule, where the third rule includes the target data packet processing policy.

Optionally, in this embodiment of this application, the first rule may be, for example, a first PDR, the second rule may be, for example, a second PDR, and the third rule may be, for example, a third PDR. This is not specifically limited in this embodiment of this application.

S604. The PSA allocates, to the terminal, the first path information and the second path information that are corresponding to the PSA.

S605. The PSA associates the first path information and the second path information with the target data packet processing policy.

If the N4 session establishment/modification request 1 further carries the first rule and the second rule, that the PSA associates the first path information and the second path information with the target data packet processing policy in this case may specifically be: The PSA associates the first path information with the first rule, and the PSA associates the second path information with the second rule.

Alternatively, if the N4 session establishment/modification request 1 further carries the third rule, that the PSA associates the first path information and the second path information with the target data packet processing policy in this case may specifically be: The PSA associates the first path information and the second path information with the third rule.

Optionally, in this embodiment of this application, associating path information with a rule may specifically be writing or inserting the path information into the corresponding rule. For example, associating the first path information with the first rule may specifically be writing or inserting the first path information into the first rule; associating the second path information with the second rule may specifically be writing or inserting the second path information into the second rule; or associating the first path information and the second path information with the third rule may specifically be writing or inserting the first path information and the second path information into the third rule. This is not specifically limited in this embodiment of this application.

S606. The PSA sends an N4 session establishment/modification response 1 to the SMF network element, so that the SMF network element receives the N4 session establishment/modification response 1 from the PSA.

The N4 session establishment/modification response 1 carries the first path information and the second path information that are corresponding to the PSA and that are allocated by the PSA to the terminal.

Optionally, the N4 session establishment/modification request 1 may further carry first indication information, and the first indication information is used to indicate the PSA to establish the first path or the second path. This is not specifically limited in this embodiment of this application.

S607 to S609 are respectively the same as steps S408 to S410. For related descriptions, reference may be made to the embodiment shown in FIG. 4. Details are not described herein again.

Based on the path update method provided in this embodiment of this application, when the I-UPF network element is inserted or the I-UPF network element is deleted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S601 to S609 may be performed by the processor 301 in the communications device 300 shown in FIG. 3 by invoking application program code stored in the memory 303. No limitation is imposed thereto in this embodiment of this application.

Optionally, that the SMF network element or the PSA allocates two pieces of path information, that is, the first path information and the second path information is used as an example for description in the embodiment shown in FIG. 5 or FIG. 6. In this embodiment of this application, the SMF network element or the PSA may alternatively allocate only one piece of path information, where the path information is used to establish the first path and the second path. In this case, only the first path information and the second path information in the embodiment shown in FIG. 5 or FIG. 6 need to be replaced with the path information. For other related descriptions, reference may be made to the embodiment shown in FIG. 5 or FIG. 6. Details are not described herein again.

In a possible implementation, the path information may include an IP address 1, an IP address 2, and a TEID. The IP address 1 may be, for example, the foregoing IPv4 address, and the IP address 2 may be, for example, the foregoing IPv6 address; or the IP address 1 may be, for example, the foregoing IPv4 address 1, and the IP address 2 may be, for example, the foregoing IPv4 address 2; or the IP address 1 may be, for example, the foregoing IPv6 address 1, and the IP address 2 may be, for example, the foregoing IPv6 address 2; or the like. This is not specifically limited in this embodiment of this application.

Alternatively, in another possible implementation, the path information may include an IP address 3 and a TEID. The IP address 3 may be the foregoing IPv4 address or the foregoing IPv6 address. When the path information changes subsequently, only the IP addresses in the two formats need to be correspondingly translated in the foregoing translation manner. This is not specifically limited in this embodiment of this application.

Alternatively, in another possible implementation, the SMF network element or the PSA may allocate two pieces of path information. Based on an operator's policy or deployment, or other information, one piece of path information may be used as optional information, and the other piece of path information may be used as required information. For example, N3 path information may be used as optional information, and N9 path information may be used as required information. For example, during operator deployment, if private network (private network) or metropolitan area network (MAN, Metropolitan Area Network) address information is used for an N3 path, and public network (public network) or wide area network (wide area network) address information is used for an N9 path, both the N3 path information and the N9 path information are required, and in this case, two pieces of path information need to be allocated. In contrast, during operator deployment, if public network or wide area network address information is used for both an N3 path and an N9 path, only the N9 path information may be allocated. The N9 path information may be used to establish both the N3 path and the N9 path. This is not specifically limited in this embodiment of this application.

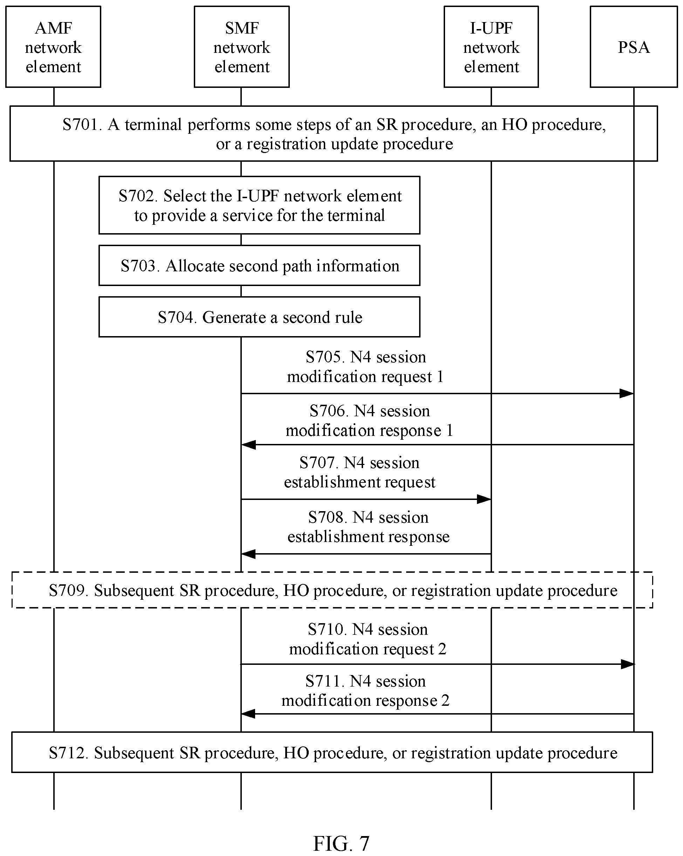

Optionally, that the path update system shown in FIG. 1 is applied to the 5G network shown in FIG. 2 is used as an example. FIG. 7 shows a path update method according to an embodiment of this application. The path update method includes the following steps.

S701. A terminal performs some steps of an SR procedure, an HO procedure, or a registration update procedure.

Optionally, the HO procedure in this embodiment of this application may specifically be an Xn handover (Xn handover) procedure or an N2 handover (N2 handover) procedure. This is not specifically limited in this embodiment of this application.

S702. An SMF network element selects an I-UPF network element to provide a service for the terminal.

If the terminal moves out of a service area of a PSA, the SMF needs to select an I-UPF network element to provide a service for the terminal. For a specific implementation of selecting, by the SMF network element, an I-UPF network element to provide a service for the terminal, reference may be made to an existing implementation. Details are not described herein.

S703. The SMF network element allocates, to the terminal, second path information corresponding to the PSA.

For related descriptions of the second path information, reference may be made to the embodiment shown in FIG. 4. Details are not described herein again.

S704. The SMF network element generates a second rule based on a target data packet processing policy and the second path information, where the second rule includes the target data packet processing policy and the second path information.

The second rule in this embodiment of this application may be, for example, a second PDR. This is not specifically limited in this embodiment of this application.

S705. The SMF network element sends an N4 session modification request 1 to the PSA, so that the PSA receives the N4 session modification request 1 from the SMF network element.

The N4 session modification request 1 carries the second rule.

Optionally, in this embodiment of this application, after receiving the N4 session modification request 1 from the SMF network element, the PSA may store the second rule. This is not specifically limited in this embodiment of this application.

S706. The PSA sends an N4 session modification response 1 to the SMF network element, so that the SMF network element receives the N4 session modification response 1 from the PSA.

S707. The SMF network element sends an N4 session establishment request to the I-UPF network element, so that the I-UPF network element receives the N4 session establishment request from the SMF network element.

The N4 session establishment request carries the second path information corresponding to the PSA.

Optionally, in this embodiment of this application, the N4 session establishment request may further carry a PDR corresponding to the I-UPF network element, and the like. For details, reference may be made to prior-art descriptions. Details are not described herein.

S708. The I-UPF network element sends an N4 session establishment response to the SMF network element, so that the SMF network element receives the N4 session establishment response from the I-UPF network element.

Optionally, in this embodiment of this application, if the I-UPF network element allocates, to the terminal, first path information and second path information that are corresponding to the I-UPF network element, the N4 session establishment response may carry the first path information and the second path information that are corresponding to the I-UPF network element. This is not specifically limited in this embodiment of this application. For related descriptions of the first path information and the second path information, reference may be made to the embodiment shown in FIG. 4. Details are not described herein again.

S709. Perform a subsequent SR procedure, HO procedure, or registration update procedure.

It should be noted that, this step may vary with different procedures. For an SR procedure, an Xn HO procedure, or a registration update procedure, step S709 is not performed and the following step S710 is directly performed; for an N2 HO procedure, this step is a subsequent step at a handover preparation stage and a part of steps at a handover execution stage. A unified description is provided herein, and is not repeated below.

S710. The SMF network element sends an N4 session modification request 2 to the PSA, so that the PSA receives the N4 session modification request 2 from the SMF network element.

The N4 session modification request 2 carries the second path information of the I-UPF network element.

In this embodiment of this application, for the N2 HO procedure, the SMF may further indicate the PSA to associate the second path information with a forwarding action rule (forwarding action rule, FAR). Then, the PSA may forward data according to the FAR rule. For related formats or functions of a FAR, reference may be made to prior-art descriptions. Details are not described herein. For a manner of associating the second path information with the FAR, reference may be made to the foregoing manner of associating the second path information with the second PDR. Details are not described herein again.

S711. The PSA sends an N4 session modification response 2 to the SMF network element, so that the SMF network element receives the N4 session modification response 2 from the PSA.

S712. Perform a subsequent SR procedure, HO procedure, or registration update procedure.

Based on the path update method provided in this embodiment of this application, when the I-UPF network element is inserted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S701 to S712 may be performed by the processor 301 in the communications device 300 shown in FIG. 3 by invoking application program code stored in the memory 303. No limitation is imposed thereto in this embodiment of this application.

It should be noted that, that steps S705 and S706 are performed before steps S707 and S708 is used as an example for description in the embodiment shown in FIG. 7. Optionally, steps S707 and S708 may alternatively be performed before steps S705 and S706 in this embodiment of this application. In this case, if this procedure is an SR procedure, an Xn HO procedure, or a registration update procedure, the N4 session modification request 1 in step S705 may carry the second path information of the I-UPF network element, and subsequent steps S710 and S711 may not need to be performed; if this procedure is an N2 HO procedure, the N4 session modification request 1 in step S705 does not carry the second path information of the I-UPF network element, and subsequent steps S710 and S711 need to be performed. For other related descriptions, reference may be made to the embodiment shown in FIG. 7. Details are not described herein again.

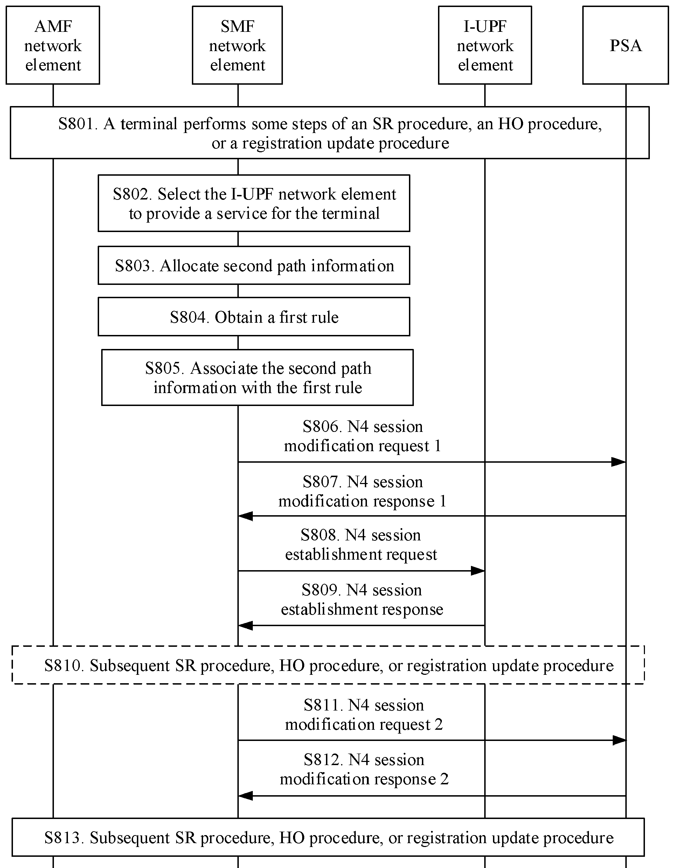

Optionally, that the path update system shown in FIG. 1 is applied to the 5G network shown in FIG. 2 is used as an example. FIG. 8 shows a path update method according to an embodiment of this application. The path update method includes the following steps.

S801 to S803 are respectively the same as steps S701 to S703. For related descriptions, reference may be made to the embodiment shown in FIG. 7. Details are not described herein again.

S804. The SMF network element obtains a first rule corresponding to first path information, where the first rule includes the first path information and a target data packet processing policy.

For related descriptions of the first rule, reference may be made to the embodiment shown in FIG. 4. Details are not described herein again.

Optionally, in this embodiment of this application, the SMF network element stores a terminal context, where the terminal context includes the first rule corresponding to the first path information. Then, the SMF network element may obtain, from the terminal context, the first rule corresponding to the first path information. This is not specifically limited in this embodiment of this application.

S805. The SMF network element associates the second path information with the first rule to obtain an updated first rule.

Optionally, in this embodiment of this application, associating the second path information with the first rule may specifically be writing or inserting the second path information into the first rule to obtain the updated first rule. The updated first rule may include the first path information, or the first path information may be replaced with the second path information. This is not specifically limited in this embodiment of this application.

S806 is similar to step S705, and is different from step S705 in that, for example, the second rule in step S705 is replaced with the updated first rule. For other related descriptions, reference may be made to the embodiment shown in FIG. 7. Details are not described herein again.

S807 to S813 are respectively the same as steps S706 to S712. For related descriptions, reference may be made to the embodiment shown in FIG. 7. Details are not described herein again.

Based on the path update method provided in this embodiment of this application, when the I-UPF network element is inserted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S801 to S813 may be performed by the processor 301 in the communications device 300 shown in FIG. 3 by invoking application program code stored in the memory 303. No limitation is imposed thereto in this embodiment of this application.

It should be noted that, that steps S806 and S807 are performed before steps S808 and S809 is used as an example for description in the embodiment shown in FIG. 8. Optionally, steps S808 and S809 may alternatively be performed before steps S806 and S807 in this embodiment of this application. In this case, if this procedure is an SR procedure or an Xn HO procedure, the N4 session modification request 1 in step S806 may carry the second path information of the I-UPF network element, and subsequent steps S811 and S812 may not need to be performed; if this procedure is an N2 HO procedure, the N4 session modification request 1 in step S806 does not carry the second path information of the I-UPF network element, and subsequent steps S811 and S812 need to be performed. For other related descriptions, reference may be made to the embodiment shown in FIG. 7. Details are not described herein again.

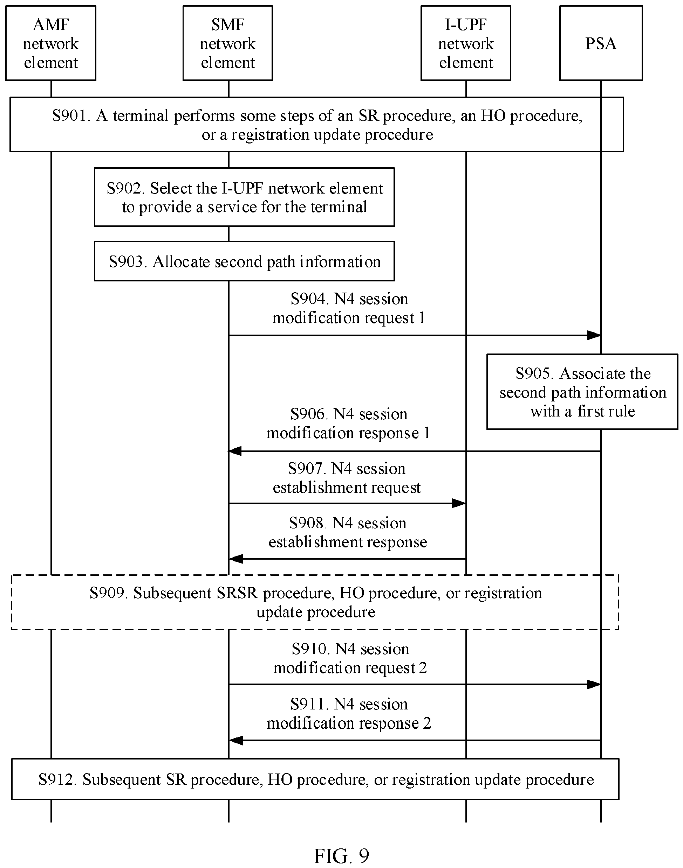

Optionally, that the path update system shown in FIG. 1 is applied to the 5G network shown in FIG. 2 is used as an example. FIG. 9 shows a path update method according to an embodiment of this application. The path update method includes the following steps.

S901 to S903 are respectively the same as steps S701 to S703. For related descriptions, reference may be made to the embodiment shown in FIG. 7. Details are not described herein again.

S904. The SMF network element sends an N4 session modification request 1 to the PSA, so that the PSA receives the N4 session modification request 1 from the SMF network element.

The N4 session modification request 1 carries the second path information and third indication information, the third indication information is used to indicate the PSA to associate the second path information with a first rule, and the first rule includes first path information and a target data packet processing policy.

S905. The PSA associates the second path information with the first rule.

For a specific implementation of step S905, reference may be made to the related implementation of associating, by the SMF network element, the second path information with the first rule in the embodiment shown in FIG. 8. Details are not described herein again.

S906 to S912 are respectively the same as steps S706 to S712. For related descriptions, reference may be made to the embodiment shown in FIG. 7. Details are not described herein again.

Based on the path update method provided in this embodiment of this application, when the I-UPF network element is inserted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S901 to S912 may be performed by the processor 301 in the communications device 300 shown in FIG. 3 by invoking application program code stored in the memory 303. No limitation is imposed thereto in this embodiment of this application.

It should be noted that, that steps S904 to S906 are performed before steps S907 and S908 is used as an example for description in the embodiment shown in FIG. 9. Optionally, steps S907 and S908 may alternatively be performed before steps S904 to S906 in this embodiment of this application. In this case, if this procedure is an SR procedure or an Xn HO procedure, the N4 session modification request 1 in step S904 may carry the second path information of the I-UPF network element, and subsequent steps S910 and S911 may not need to be performed; if this procedure is an N2 HO procedure, the N4 session modification request 1 in step S904 does not carry the second path information of the I-UPF network element, and subsequent steps S910 and S911 need to be performed. For other related descriptions, reference may be made to the embodiment shown in FIG. 7. Details are not described herein again.

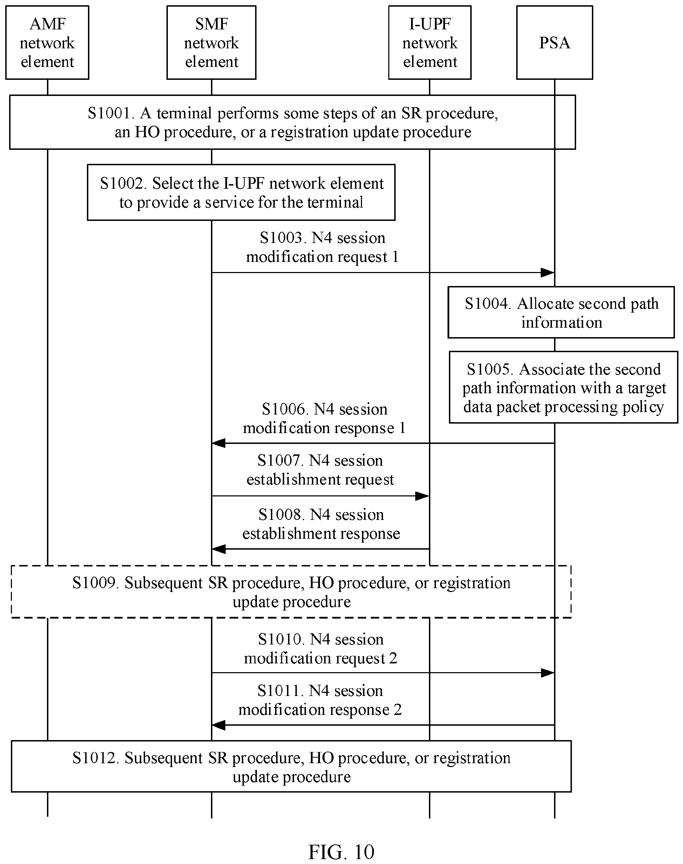

Optionally, that the path update system shown in FIG. 1 is applied to the 5G network shown in FIG. 2 is used as an example. FIG. 10 shows a path update method according to an embodiment of this application. The path update method includes the following steps.

S1001 and S1002 are respectively the same as steps S701 and S702. For related descriptions, reference may be made to the embodiment shown in FIG. 7. Details are not described herein again.

S1003. The SMF network element sends an N4 session modification request 1 to the PSA, so that the PSA receives the N4 session modification request 1 from the SMF network element.

The N4 session modification request 1 carries fourth indication information, and the fourth indication information is used to indicate the PSA to allocate, to the terminal, second path information corresponding to the PSA. For related descriptions of the second path information, reference may be made to the embodiment shown in FIG. 4. Details are not described herein again.

Optionally, in a possible implementation, the N4 session modification request 1 further carries third indication information, the third indication information is used to indicate the PSA to associate the second path information with a first rule, and the first rule includes first path information and a target data packet processing policy.

Alternatively, optionally, in a possible implementation, the N4 session modification request 1 further carries a second rule, where the second rule includes the target data packet processing policy.

S 1004. The PSA allocates, to the terminal, the second path information corresponding to the PSA.

S1005. The PSA associates the second path information with the target data packet processing policy.

If the N4 session modification request 1 further carries the third indication information, that the PSA associates the second path information with the target data packet processing policy may specifically be: The PSA associates the second path information with the first rule based on the third indication information. For a specific implementation of associating, by the PSA, the second path information with the first rule, reference may be made to the embodiment shown in FIG. 9. Details are not described herein again.

If the N4 session modification request 1 further carries the second rule, that the PSA associates the second path information with the target data packet processing policy may specifically be: The PSA associates the second path information with the second rule. For a specific implementation of associating, by the PSA, the second path information with the second rule, reference may be made to the embodiment shown in FIG. 6. Details are not described herein again.

S1006. The PSA sends an N4 session modification response 1 to the SMF network element, so that the SMF network element receives the N4 session modification response 1 from the PSA.

The N4 session modification response 1 carries the second path information that is corresponding to the PSA and that is allocated by the PSA to the terminal.

S1007 to S1012 are respectively the same as steps S706 to S712. For related descriptions, reference may be made to the embodiment shown in FIG. 7. Details are not described herein again.

Based on the path update method provided in this embodiment of this application, when the I-UPF network element is inserted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S1001 to S1012 may be performed by the processor 301 in the communications device 300 shown in FIG. 3 by invoking application program code stored in the memory 303. No limitation is imposed thereto in this embodiment of this application.

It should be noted that, that steps S1003 to S1006 are performed before steps S1007 and S1008 is used as an example for description in the embodiment shown in FIG. 10. Optionally, in this embodiment of this application, after selecting the I-UPF network element to provide a service for the terminal, the SMF network element may alternatively first send the N4 session establishment request 1 to the I-UPF network element, so that the I-UPF network element receives the N4 session establishment request 1 from the SMF network element. The N4 session establishment request 1 carries the second path information corresponding to the I-UPF network element. In this case, after receiving the N4 session establishment response 1 from the I-UPF network element, the SMF network element similarly performs steps S1003 to S1006. The N4 session modification request 1 carries the second path information corresponding to the I-UPF network element. In this case, after receiving the N4 session modification response 1 from the PSA, the SMF network element sends an N4 session modification request 3 to the I-UPF network element, so that the I-UPF network element receives the N4 session modification request 3 from the SMF network element, where the N4 session establishment modification 3 carries the second path information corresponding to the PSA. Then, the I-UPF network element sends an N4 session modification response 3 to the SMF network element, and performs a subsequent SR procedure, HO procedure, or registration update procedure. For related descriptions, reference may be made to the embodiment shown in FIG. 10. Details are not described herein again.

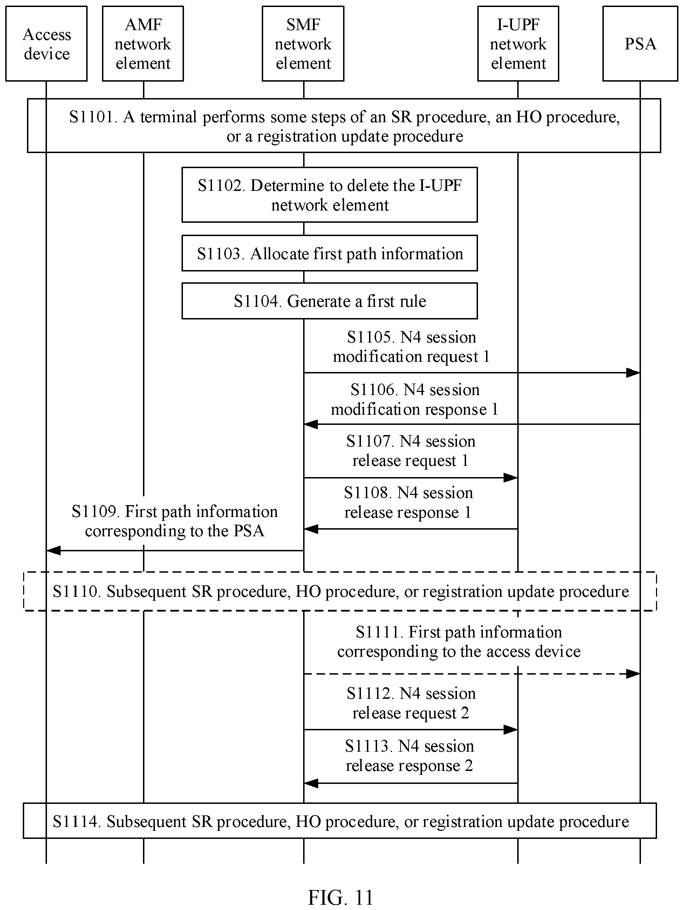

Optionally, that the path update system shown in FIG. 1 is applied to the 5G network shown in FIG. 2 is used as an example. FIG. 11 shows a path update method according to an embodiment of this application. The path update method includes the following steps.

S1101 is the same as step S701. For related descriptions, reference may be made to the embodiment shown in FIG. 7. Details are not described herein again.

S1102. An SMF network element determines that an I-UPF network element needs to be deleted.

For example, assuming that the terminal moves into a service area of a PSA from an area outside the service area of the PSA, the SMF network element may determine that the I-UPF network element needs to be deleted.

S1103. The SMF network element allocates, to the terminal, first path information corresponding to the PSA.

For related descriptions of the first path information, reference may be made to the embodiment shown in FIG. 4. Details are not described herein again.

S1104. The SMF network element generates a first rule based on a target data packet processing policy and the first path information, where the first rule includes the target data packet processing policy and the first path information.

For related descriptions of the first rule, reference may be made to the embodiment shown in FIG. 4. Details are not described herein again.

S1105. The SMF network element sends an N4 session modification request 1 to the PSA, so that the PSA receives the N4 session modification request 1 from the SMF network element.

The N4 session modification request 1 carries the first rule.

Optionally, in this embodiment of this application, after receiving the N4 session modification request 1 from the SMF network element, the PSA may store the first rule. This is not specifically limited in this embodiment of this application.

Optionally, in this embodiment of this application, for an SR procedure or an Xn HO procedure, the N4 session modification request 1 may further carry first path information corresponding to an access device, and the following step S1111 may not need to be performed in this case; for an N2 HO procedure, the N4 session modification request 1 does not carry first path information corresponding to an access device, and the following step S 1111 needs to be performed in this case.

S1106. The PSA sends an N4 session modification response 1 to the SMF network element, so that the SMF network element receives the N4 session modification response 1 from the PSA.

S1107. The SMF network element sends an N4 session release request 1 to the I-UPF network element, so that the I-UPF network element receives the N4 session release request 1 from the SMF network element.

The N4 session release request 1 is used to request to release first path information corresponding to the I-UPF network element.

S1108. The I-UPF network element sends an N4 session release response 1 to the SMF network element, so that the SMF network element receives the N4 session release response 1 from the I-UPF network element.

The N4 session release response 1 is used to confirm that the I-UPF network element has released the first path information corresponding to the I-UPF network element.

S1109. The SMF network element sends, to the access device, the first path information corresponding to the PSA, so that the access device receives, from the SMF network element, the first path information corresponding to the PSA.

It should be noted that there is no definite execution sequence between step S1105, step S1107, and step S1109. One or more steps may first be performed, and then the other steps may be performed. This is not specifically limited in this embodiment of this application.

S1110. Perform a subsequent SR procedure, HO procedure, or registration update procedure.

S1111. Optionally, for the N2 HO procedure, the SMF network element sends, to the PSA, the first path information corresponding to the access device, so that the PSA receives the first path information of the access device from the SMF network element.

In this embodiment of this application, for the N2 HO procedure, the SMF may further indicate the PSA to associate the first path information with a FAR. Then, the PSA may forward data according to the FAR rule. For a manner of associating the first path information with the FAR, reference may be made to the foregoing manner of associating the first path information with the first PDR. Details are not described herein again.

S1112. The SMF network element sends an N4 session release request 2 to the I-UPF network element, so that the I-UPF network element receives the N4 session release request 2 from the SMF network element.

The N4 session release request 2 is used to request to release a resource, on the I-UPF network element, corresponding to the terminal.

S1113. The I-UPF network element sends an N4 session release response 2 to the SMF network element, so that the SMF network element receives the N4 session release response 2 from the I-UPF network element.

The N4 session release response 2 is used to confirm that the I-UPF network element has released a resource, on the I-UPF network element, corresponding to the terminal.

S1114. Perform a subsequent SR procedure, HO procedure, or registration update procedure.

Based on the path update method provided in this embodiment of this application, when the I-UPF network element is deleted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S1101 to S1114 may be performed by the processor 301 in the communications device 300 shown in FIG. 3 by invoking application program code stored in the memory 303. No limitation is imposed thereto in this embodiment of this application.

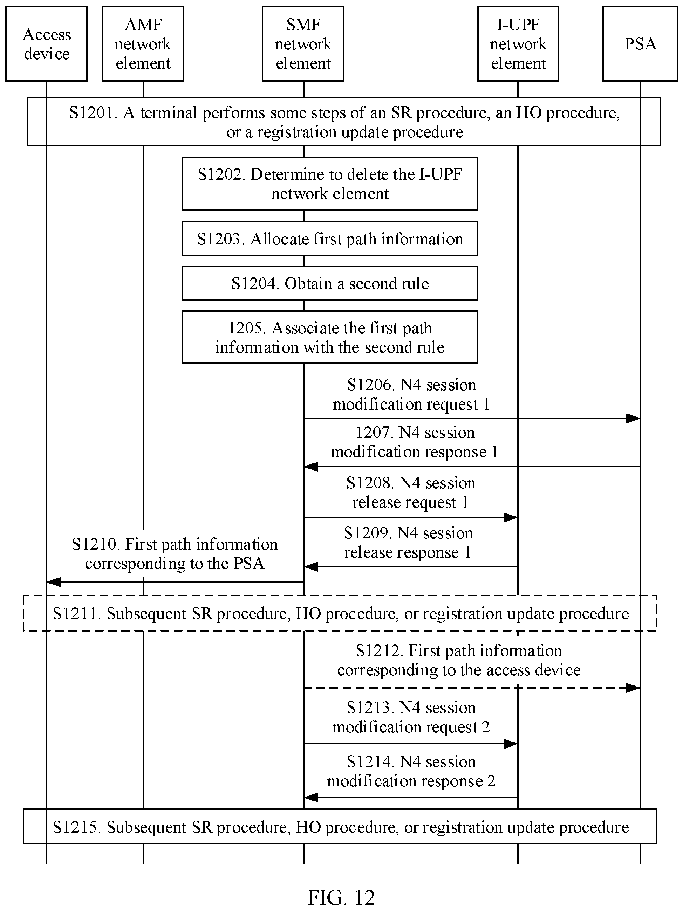

Optionally, that the path update system shown in FIG. 1 is applied to the 5G network shown in FIG. 2 is used as an example. FIG. 12 shows a path update method according to an embodiment of this application. The path update method includes the following steps.

S1201 to S1203 are respectively the same as steps S1101 to S1103. For related descriptions, reference may be made to the embodiment shown in FIG. 11. Details are not described herein again.

S1204. The SMF network element obtains a second rule corresponding to second path information, where the second rule includes the second path information and a target data packet processing policy.

For related descriptions of the second rule, reference may be made to the embodiment shown in FIG. 4. Details are not described herein again.

S1205. The SMF network element associates the first path information with the second rule to obtain an updated first rule.

Optionally, in this embodiment of this application, associating the first path information with the second rule may specifically be writing or inserting the first path information into the second rule to obtain an updated second rule. The updated second rule may include the second path information, or the second path information may be replaced with the first path information. This is not specifically limited in this embodiment of this application.

S1206 is similar to step S1105, and is different from step S1105 in that, for example, the first rule in step S1105 is replaced with the updated second rule. For other related descriptions, reference may be made to the embodiment shown in FIG. 11. Details are not described herein again.

S1207 to S1215 are respectively the same as steps S1106 to S1114. For related descriptions, reference may be made to the embodiment shown in FIG. 11. Details are not described herein again.

Based on the path update method provided in this embodiment of this application, when the I-UPF network element is deleted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S1201 to S1215 may be performed by the processor 301 in the communications device 300 shown in FIG. 3 by invoking application program code stored in the memory 303. No limitation is imposed thereto in this embodiment of this application.

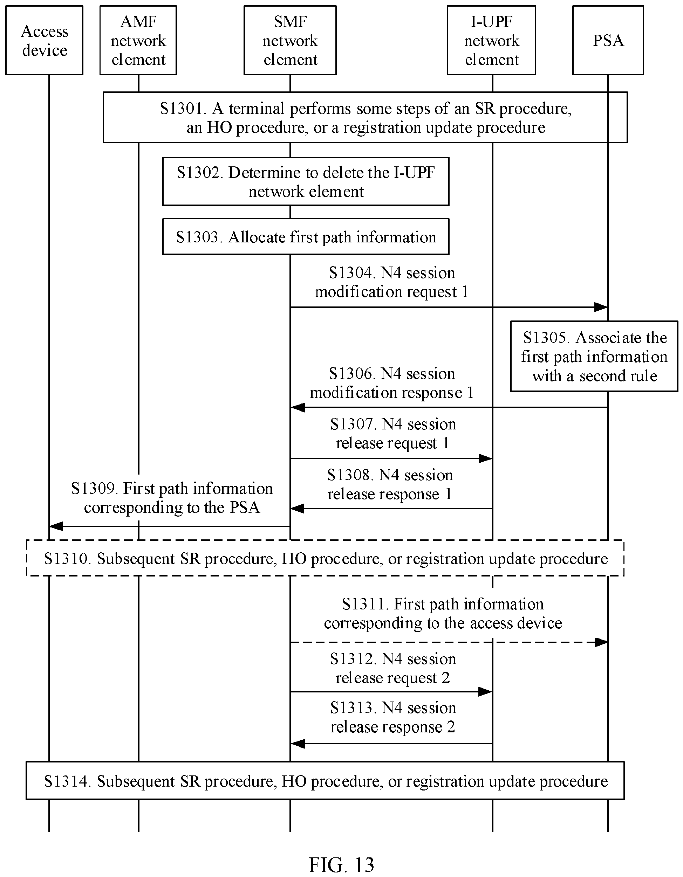

Optionally, that the path update system shown in FIG. 1 is applied to the 5G network shown in FIG. 2 is used as an example. FIG. 13 shows a path update method according to an embodiment of this application. The path update method includes the following steps.

S1301 to S1303 are respectively the same as steps S1101 to S1103. For related descriptions, reference may be made to the embodiment shown in FIG. 11. Details are not described herein again.

S1304. The SMF network element sends an N4 session modification request 1 to the PSA, so that the PSA receives the N4 session modification request 1 from the SMF network element.

The N4 session modification request 1 carries the first path information and fifth indication information, the fifth indication information is used to indicate the PSA to associate the first path information with a second rule, and the second rule includes second path information and a target data packet processing policy.

S1305. The PSA associates the first path information with the second rule.

For a specific implementation of step S1305, reference may be made to the related implementation of associating, by the SMF network element, the first path information with the second rule in the embodiment shown in FIG. 12. Details are not described herein again.

S1306 to S1314 are respectively the same as steps S1106 to S1114. For related descriptions, reference may be made to the embodiment shown in FIG. 11. Details are not described herein again.

Based on the path update method provided in this embodiment of this application, when the I-UPF network element is deleted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S1301 to S1314 may be performed by the processor 301 in the communications device 300 shown in FIG. 3 by invoking application program code stored in the memory 303. No limitation is imposed thereto in this embodiment of this application.

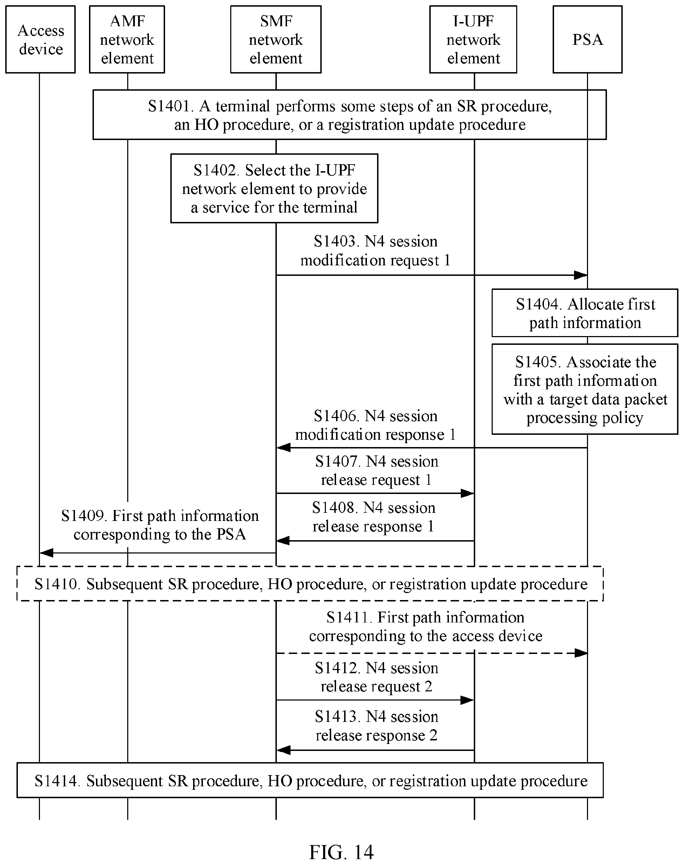

Optionally, that the path update system shown in FIG. 1 is applied to the 5G network shown in FIG. 2 is used as an example. FIG. 14 shows a path update method according to an embodiment of this application. The path update method includes the following steps.

S1401 and S1402 are respectively the same as steps S1101 and S1102. For related descriptions, reference may be made to the embodiment shown in FIG. 11. Details are not described herein again.

S1403. The SMF network element sends an N4 session modification request 1 to the PSA, so that the PSA receives the N4 session modification request 1 from the SMF network element.

The N4 session modification request 1 carries sixth indication information, and the sixth indication information is used to indicate the PSA to allocate, to the terminal, first path information corresponding to the PSA. For related descriptions of the first path information, reference may be made to the embodiment shown in FIG. 4. Details are not described herein again.

Optionally, in a possible implementation, the N4 session modification request 1 further carries fifth indication information, the fifth indication information is used to indicate the PSA to associate the first path information with a second rule, and the second rule includes second path information and a target data packet processing policy.

Alternatively, optionally, in a possible implementation, the N4 session modification request 1 further carries a first rule, where the first rule includes the target data packet processing policy.

S1404. The PSA allocates, to the terminal, the first path information corresponding to the PSA.

S1405. The PSA associates the first path information with the target data packet processing policy.

If the N4 session modification request 1 further carries the fifth indication information, that the PSA associates the first path information with the target data packet processing policy may specifically be: The PSA associates the first path information with the second rule based on the fifth indication information. For a specific implementation of associating, by the PSA, the first path information with the second rule, reference may be made to the embodiment shown in FIG. 13. Details are not described herein again.

If the N4 session modification request 1 further carries the first rule, that the PSA associates the first path information with the target data packet processing policy may specifically be: The PSA associates the first path information with the first rule. For a specific implementation of associating, by the PSA, the first path information with the first rule, reference may be made to the embodiment shown in FIG. 6. Details are not described herein again.

S1406. The PSA sends an N4 session modification response 1 to the SMF network element, so that the SMF network element receives the N4 session modification response 1 from the PSA.

The N4 session modification response 1 carries the first path information that is corresponding to the PSA and that is allocated by the PSA to the terminal.

S1407 to S1414 are respectively the same as steps S1107 to S1114. For related descriptions, reference may be made to the embodiment shown in FIG. 11. Details are not described herein again.

It should be noted that the PSA allocates the first path information corresponding to the PSA in this embodiment of this application, and therefore step S1409 needs to be performed after step S1406 in this embodiment of this application. A unified description is provided herein, and is not repeated below.

Based on the path update method provided in this embodiment of this application, when the 1-UPF network element is deleted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S1401 to S1414 may be performed by the processor 301 in the communications device 300 shown in FIG. 3 by invoking application program code stored in the memory 303. No limitation is imposed thereto in this embodiment of this application.

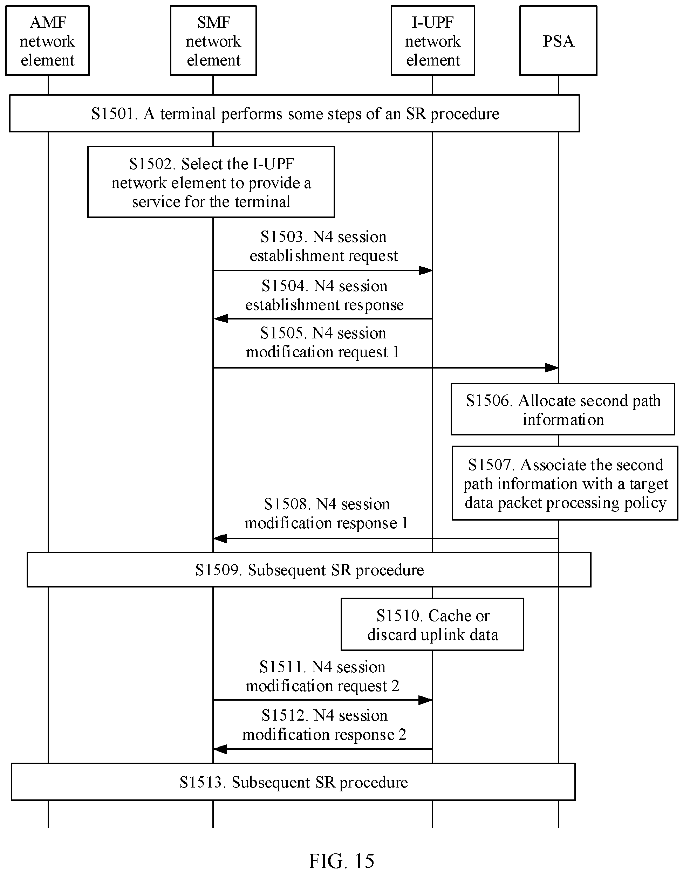

Optionally, that the path update system shown in FIG. 1 is applied to the 5G network shown in FIG. 2 is used as an example. FIG. 15 shows a path update method according to an embodiment of this application. The path update method includes the following steps.

S1501 and S1502 are respectively similar to steps S1001 and S1002, and are different from steps S1001 and S1002 in that, for example, this embodiment of this application is targeted only for an SR procedure. For other related descriptions, reference may be made to the embodiment shown in FIG. 10. Details are not described herein again.

S1503. The SMF network element sends an N4 session establishment request to the 1-UPF network element, so that the 1-UPF network element receives the session establishment request from the SMF network element.

The session establishment request may carry a PDR corresponding to the 1-UPF network element. For details, reference may be made to an existing implementation. Details are not described herein.

S1504. The 1-UPF network element sends an N4 session establishment response to the SMF network element, so that the SMF network element receives the session establishment response from the 1-UPF network element.

Optionally, in this embodiment of this application, if the 1-UPF network element allocates first path information and second path information that are corresponding to the 1-UPF network element, the N4 session establishment response may further carry the first path information and the second path information that are corresponding to the 1-UPF network element. For details, reference may be made to an existing implementation. Details are not described herein.

S1505 to S1508 are respectively similar to steps S1003 to S1006, and are different from steps S1003 and S1006 in that, for example, an N4 session modification request 1 in this embodiment of this application may further carry the second path information corresponding to the 1-UPF network element. For other related descriptions, reference may be made to the embodiment shown in FIG. 10. Details are not described herein again.

S1509. Perform a subsequent SR procedure.

In this case, the PSA may send downlink data to the 1-UPF network element. However, the 1-UPF network element does not know the second path information corresponding to the PSA, and therefore cannot send uplink data to the PSA.

S1510. The 1-UPF network element caches received uplink data or discards received uplink data.

S1511. The SMF network element sends an N4 session modification request 2 to the 1-UPF network element, so that the 1-UPF network element receives the N4 session modification request 2 from the SMF network element.

The N4 session modification request 2 carries the second path information corresponding to the PSA.

S1512. The 1-UPF network element sends an N4 session modification response 2 to the SMF network element, so that the SMF network element receives the N4 session modification response 2 from the 1-UPF network element.

S1513. Perform a subsequent SR procedure.

Based on the path update method provided in this embodiment of this application, when the 1-UPF network element is inserted, a corresponding user plane path can be updated in a timely manner on a premise that a data packet processing manner is not changed. For analysis of related technical effects, reference may be made to the foregoing content of the path update system. Details are not described herein again.

Optionally, the SR procedure in steps S1501 to S1509 in this embodiment of this application may be replaced with an Xn HO procedure. In this case, correspondingly, steps S1511 and S1512 are performed in a registration update procedure after the Xn HO procedure. Other steps of the registration update procedure are performed after step S1512. This is not specifically limited in this embodiment of this application.

Actions of the SMF network element or the PSA in steps S1501 to S1513 may be performed by the processor 301 in the communications device 300 shown in FIG. 3 by invoking application program code stored in the memory 303. No limitation is imposed thereto in this embodiment of this application.

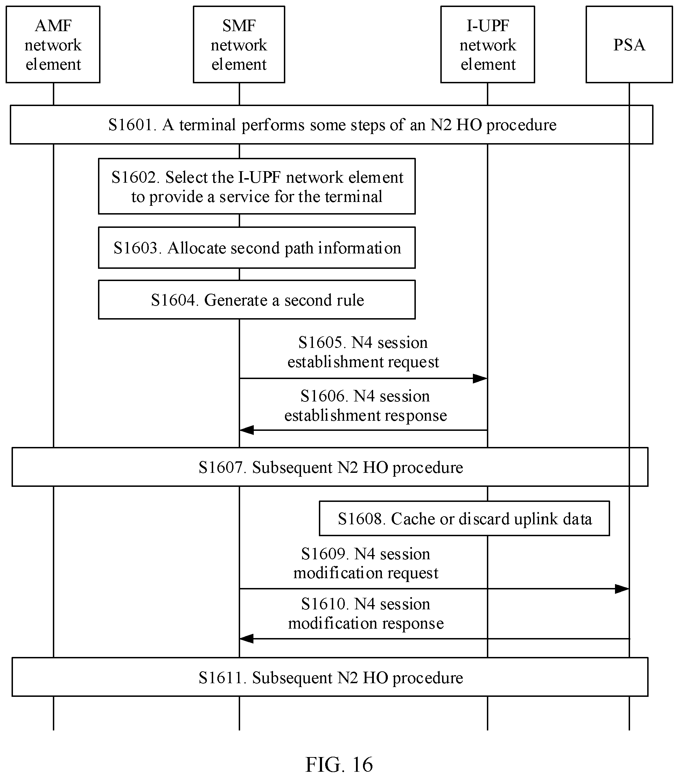

Optionally, that the path update system shown in FIG. 1 is applied to the 5G network shown in FIG. 2 is used as an example. FIG. 16 shows a path update method according to an embodiment of this application. The path update method includes the following steps.

S1601 and S1602 are respectively similar to steps S701 and S702, and are different from steps S701 and S702 in that, for example, this embodiment of this application is targeted only for an N2 HO procedure. For other related descriptions, reference may be made to the embodiment shown in FIG. 7. Details are not described herein again.

S1603 and S1604 are respectively the same as steps S703 and S704. For related descriptions, reference may be made to the embodiment shown in FIG. 7. Details are not described herein again.

S1605 and S1606 are respectively the same as steps S707 and S708. For related descriptions, reference may be made to the embodiment shown in FIG. 7. Details are not described herein again.

S1607. Perform a subsequent N2 HO procedure.

In this case, the PSA may send downlink data to the 1-UPF network element. However, the 1-UPF network element does not know the second path information corresponding to the PSA, and therefore cannot send uplink data to the PSA.

S1608. The 1-UPF network element caches received uplink data or discards received uplink data.

S1609. The SMF network element sends an N4 session modification request to the PSA, so that the PSA receives the N4 session modification request from the SMF network element.

The N4 session modification request carries the second rule.

Optionally, the N4 session modification request may further carry the second path information of the I-UPF network element. For details, reference may be made to an existing implementation. Details are not described herein.

S1610. The PSA sends an N4 session modification response to the SMF network element, so that the SMF network element receives the N4 session modification response from the PSA.

S1611. Perform a subsequent N2 HO procedure.

Based on the path update method provided in this embodiment of this application, when the 1-UPF network element is inserted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S1601 to S1611 may be performed by the processor 301 in the communications device 300 shown in FIG. 3 by invoking application program code stored in the memory 303. No limitation is imposed thereto in this embodiment of this application.

Optionally, the manner of associating, by the SMF network element, the second path information with the target path information in the embodiment shown in FIG. 7 is used for description in the embodiment shown in FIG. 16. Optionally, the manner of associating, by the SMF network element, the second path information with the target path information in the embodiment shown in FIG. 8 or FIG. 9 may alternatively be used for path updating in the embodiment shown in FIG. 16. For related descriptions, reference may be made to the embodiment shown in FIG. 8 or FIG. 9. Details are not described herein again.

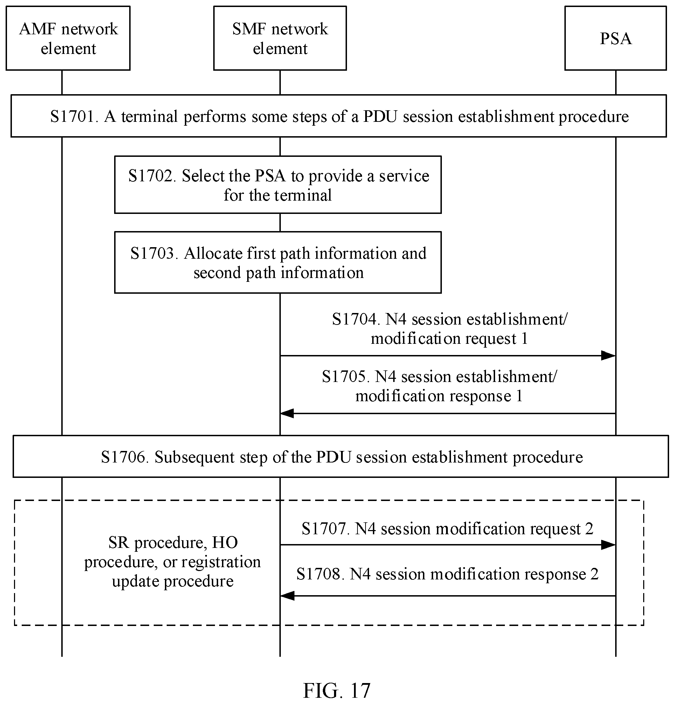

Optionally, that the path update system shown in FIG. 1 is applied to the 5G network shown in FIG. 2 is used as an example. FIG. 17 shows a path update method according to an embodiment of this application. The path update method includes the following steps.

S1701 to S1703 are respectively the same as steps S401 to S403. For related descriptions, reference may be made to the embodiment shown in FIG. 4. Details are not described herein again.

S1704. The SMF network element sends an N4 session establishment/modification request 1 to the PSA, so that the PSA receives the N4 session establishment/modification request 1 from the SMF network element.

The N4 session establishment/modification request 1 carries the first path information and the second path information that are corresponding to the PSA.

Optionally, in this embodiment of this application, after receiving the N4 session establishment/modification request from the SMF network element, the PSA may store the first path information and the second path information that are corresponding to the PSA. This is not specifically limited in this embodiment of this application.

Optionally, the N4 session establishment/modification request 1 may further carry first indication information, and the first indication information is used to indicate the PSA to establish the first path or the second path. This is not specifically limited in this embodiment of this application.

S1705 to S1708 are respectively the same as steps S407 to S410. For related descriptions, reference may be made to the embodiment shown in FIG. 4. Details are not described herein again.

Based on the path update method provided in this embodiment of this application, when the 1-UPF network element is inserted or the 1-UPF network element is deleted, a corresponding user plane path can be updated in a timely manner. For analysis of related technical effects, reference may be made to the foregoing content of the path update system. Details are not described herein again.

Actions of the SMF network element or the PSA in steps S1701 to S1708 may be performed by the processor 301 in the communications device 300 shown in FIG. 3 by invoking application program code stored in the memory 303. No limitation is imposed thereto in this embodiment of this application.

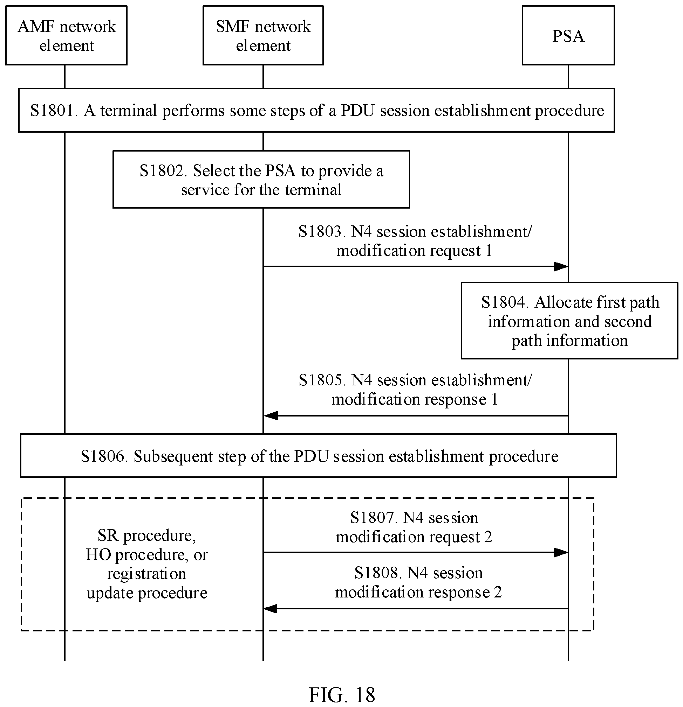

Optionally, that the path update system shown in FIG. 1 is applied to the 5G network shown in FIG. 2 is used as an example. FIG. 18 shows a path update method according to an embodiment of this application. The path update method includes the following steps.

S1801 and S1802 are respectively the same as steps S601 and S602. For related descriptions, reference may be made to the embodiment shown in FIG. 6. Details are not described herein again.

S1803. The SMF network element sends an N4 session establishment/modification request 1 to the PSA, so that the PSA receives the N4 session establishment/modification request 1 from the SMF network element.

The N4 session establishment/modification request 1 is used to request the PSA to allocate, to the terminal, first path information and second path information that are corresponding to the PSA. For related descriptions of the first path information and the second path information, reference may be made to the embodiment shown in FIG. 4. Details are not described herein again.

Optionally, the N4 session establishment/modification request 1 may further carry first indication information, and the first indication information is used to indicate the PSA to establish the first path or the second path. This is not specifically limited in this embodiment of this application.

S1804 is the same as step S604. For related descriptions, reference may be made to the embodiment shown in FIG. 6. Details are not described herein again.

S1805 to S1808 are respectively the same as steps S606 to S609. For related descriptions, reference may be made to the embodiment shown in FIG. 6. Details are not described herein again.

Based on the path update method provided in this embodiment of this application, when the 1-UPF network element is inserted or the 1-UPF network element is deleted, a corresponding user plane path can be updated in a timely manner. For analysis of related technical effects, reference may be made to the foregoing content of the path update system. Details are not described herein again.

Actions of the SMF network element or the PSA in steps S1801 to S1808 may be performed by the processor 301 in the communications device 300 shown in FIG. 3 by invoking application program code stored in the memory 303. No limitation is imposed thereto in this embodiment of this application.

Optionally, that the SMF network element or the PSA allocates two pieces of path information, that is, the first path information and the second path information is used as an example for description in the embodiment shown in FIG. 17 or FIG. 18. In this embodiment of this application, the SMF network element or the PSA may alternatively allocate only one piece of path information, where the path information is used to establish the first path and the second path. In this case, only the first path information and the second path information in the embodiment shown in FIG. 17 or FIG. 18 need to be replaced with the path information. For other related descriptions, reference may be made to the embodiment shown in FIG. 17 or FIG. 18. Details are not described herein again. For related descriptions of the path information, reference may be made to some descriptions in the embodiments shown in FIG. 6 and FIG. 7. Details are not described herein again.

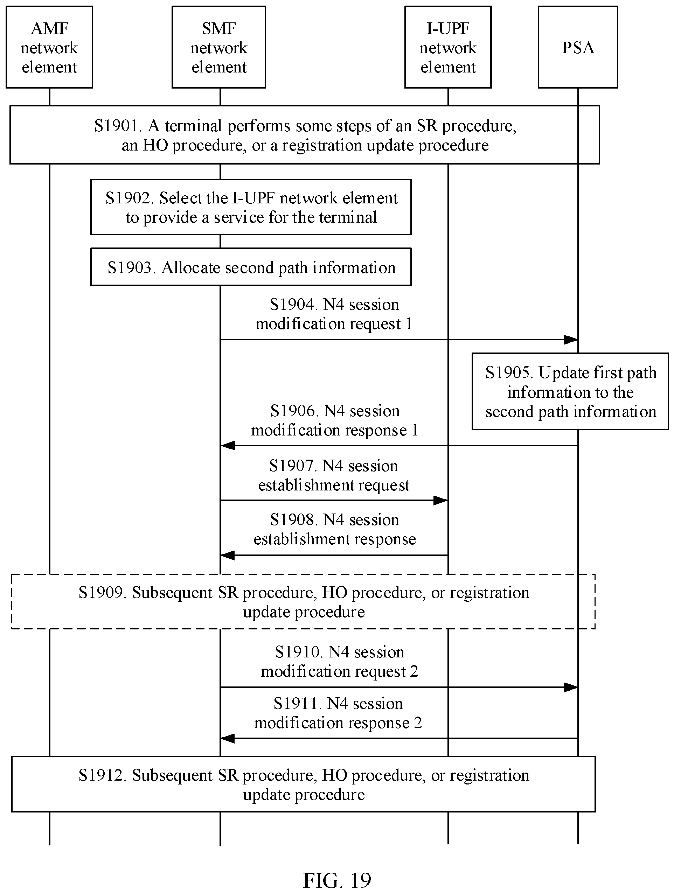

Optionally, that the path update system shown in FIG. 1 is applied to the 5G network shown in FIG. 2 is used as an example. FIG. 19 shows a path update method according to an embodiment of this application. The path update method includes the following steps.

S1901 to S1903 are respectively the same as steps S701 to S703. For related descriptions, reference may be made to the embodiment shown in FIG. 7. Details are not described herein again.

S1904. The SMF network element sends an N4 session modification request 1 to the PSA, so that the PSA receives the N4 session modification request 1 from the SMF network element.

The N4 session modification request 1 carries the second path information corresponding to the PSA.

S1905. The PSA updates first path information to the second path information.

For related descriptions of the first path information, reference may be made to the embodiment shown in FIG. 4. Details are not described herein again.

S1906 to S1912 are respectively the same as steps S706 to S712. For the related implementation, reference may be made to the embodiment shown in FIG. 7. Details are not described herein again.

Based on the path update method provided in this embodiment of this application, when the 1-UPF network element is inserted, a corresponding user plane path can be updated in a timely manner. For analysis of related technical effects, reference may be made to the foregoing content of the path update system. Details are not described herein again.

Actions of the SMF network element or the PSA in steps S1901 to S1912 may be performed by the processor 301 in the communications device 300 shown in FIG. 3 by invoking application program code stored in the memory 303. No limitation is imposed thereto in this embodiment of this application.

It should be noted that, that steps S1904 to S1906 are performed before steps S1907 and S1908 is used as an example for description in the embodiment shown in FIG. 19. Optionally, steps S1907 and S1908 may alternatively be performed before steps S194 to S1906 in this embodiment of this application. In this case, if this procedure is an SR procedure, an Xn HO procedure, or a registration update procedure, the N4 session modification request 1 in step S1904 may carry the second path information of the 1-UPF network element, and subsequent steps S1910 and S1911 may not need to be performed; if this procedure is an N2 HO procedure, the N4 session modification request 1 in step S1904 does not carry the second path information of the 1-UPF network element, and subsequent steps S1910 and S1911 need to be performed. For other related descriptions, reference may be made to the embodiment shown in FIG. 19. Details are not described herein again.

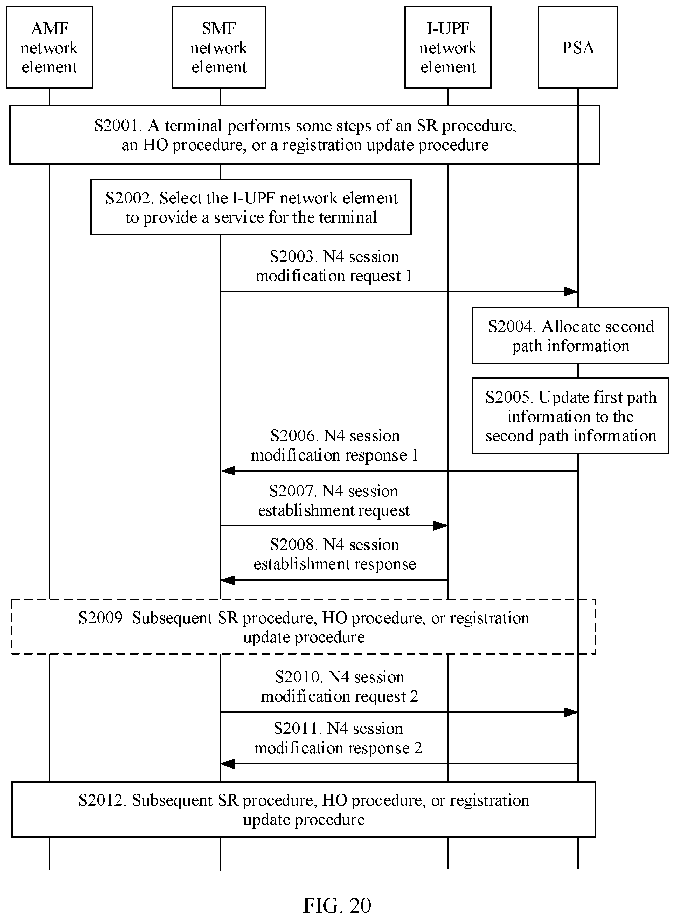

Optionally, that the path update system shown in FIG. 1 is applied to the 5G network shown in FIG. 2 is used as an example. FIG. 20 shows a path update method according to an embodiment of this application. The path update method includes the following steps.

S2001 and S2002 are respectively the same as steps S1001 and S1002. For related descriptions, reference may be made to the embodiment shown in FIG. 10. Details are not described herein again.

S2003. The SMF network element sends an N4 session establishment/modification request 1 to the PSA, so that the PSA receives the N4 session establishment/modification request 1 from the SMF network element.

The N4 session establishment/modification request 1 is used to request the PSA to allocate, to the terminal, second path information corresponding to the PSA. For related descriptions of the second path information, reference may be made to the embodiment shown in FIG. 4. Details are not described herein again.

S2004 is the same as step S1004. For related descriptions, reference may be made to the embodiment shown in FIG. 10. Details are not described herein again.

S2005. The PSA updates first path information to the second path information.

For related descriptions of the first path information, reference may be made to the embodiment shown in FIG. 4. Details are not described herein again.

S2006 to S2012 are respectively the same as steps S1006 to S1012. For the related implementation, reference may be made to the embodiment shown in FIG. 10. Details are not described herein again.

Based on the path update method provided in this embodiment of this application, when the 1-UPF network element is inserted, a corresponding user plane path can be updated in a timely manner. For analysis of related technical effects, reference may be made to the foregoing content of the path update system. Details are not described herein again.

Actions of the SMF network element or the PSA in steps S2001 to S2012 may be performed by the processor 301 in the communications device 300 shown in FIG. 3 by invoking application program code stored in the memory 303. No limitation is imposed thereto in this embodiment of this application.

It should be noted that, that steps S2003 to S2006 are performed before steps S2007 and S2008 is used as an example for description in the embodiment shown in FIG. 20. Optionally, in this embodiment of this application, after selecting the 1-UPF network element to provide a service for the terminal, the SMF network element may alternatively first send the N4 session establishment request 1 to the 1-UPF network element, so that the 1-UPF network element receives the N4 session establishment request 1 from the SMF network element. The N4 session establishment request 1 carries the second path information corresponding to the 1-UPF network element. In this case, after receiving the N4 session establishment response 1 from the 1-UPF network element, the SMF network element similarly performs steps S2003 to S2006. The N4 session modification request 1 carries the second path information corresponding to the 1-UPF network element. In this case, after receiving the N4 session modification response 1 from the PSA, the SMF network element sends an N4 session modification request 3 to the 1-UPF network element, so that the 1-UPF network element receives the N4 session modification request 3 from the SMF network element, where the N4 session establishment modification 3 carries the second path information corresponding to the PSA. Then, the I-UPF network element sends an N4 session modification response 3 to the SMF network element, and performs a subsequent SR procedure, HO procedure, or registration update procedure. For related descriptions, reference may be made to the embodiment shown in FIG. 10. Details are not described herein again.

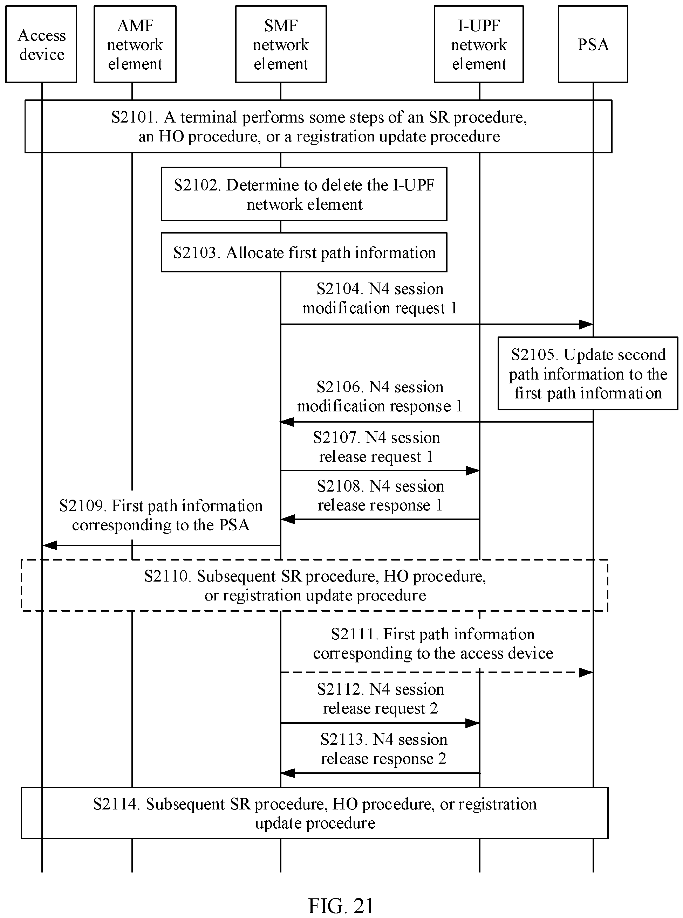

Optionally, that the path update system shown in FIG. 1 is applied to the 5G network shown in FIG. 2 is used as an example. FIG. 21 shows a path update method according to an embodiment of this application. The path update method includes the following steps.

S2101 to S2103 are respectively the same as steps S1101 to S1103. For related descriptions, reference may be made to the embodiment shown in FIG. 11. Details are not described herein again.

S2104. The SMF network element sends an N4 session modification request 1 to the PSA, so that the PSA receives the N4 session modification request 1 from the SMF network element.

The N4 session modification request 1 carries the first path information corresponding to the PSA.

S2105. The PSA updates second path information to the first path information.

For related descriptions of the second path information, reference may be made to the embodiment shown in FIG. 4. Details are not described herein again.

S2106 to S2114 are respectively the same as steps S1106 to S1114. For the related implementation, reference may be made to the embodiment shown in FIG. 11. Details are not described herein again.

Based on the path update method provided in this embodiment of this application, when the 1-UPF network element is deleted, a corresponding user plane path can be updated in a timely manner. For analysis of related technical effects, reference may be made to the foregoing content of the path update system. Details are not described herein again.

Actions of the SMF network element or the PSA in steps S2101 to S2114 may be performed by the processor 301 in the communications device 300 shown in FIG. 3 by invoking application program code stored in the memory 303. No limitation is imposed thereto in this embodiment of this application.

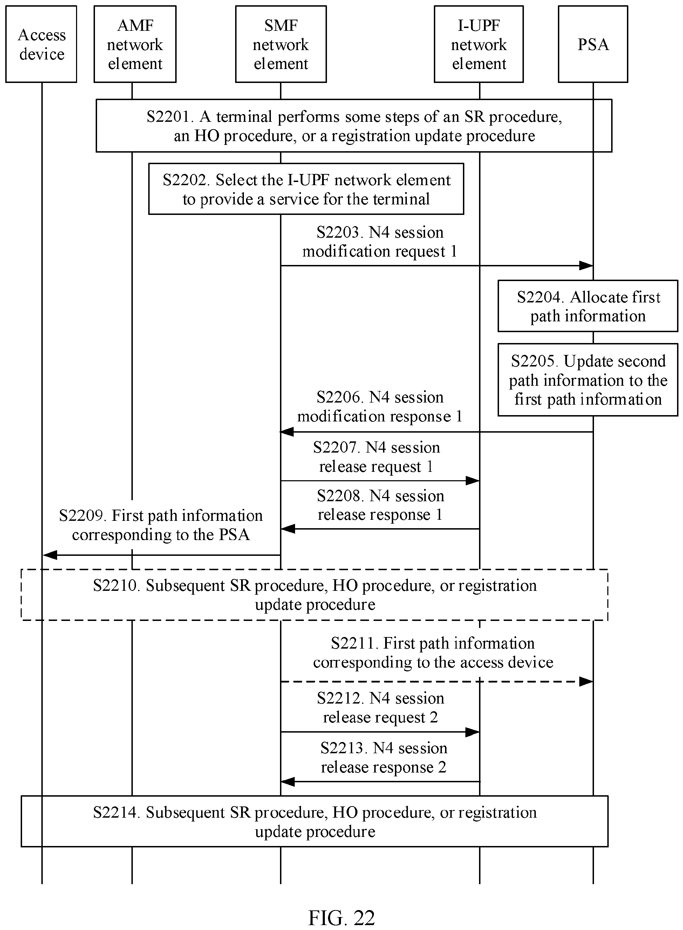

Optionally, that the path update system shown in FIG. 1 is applied to the 5G network shown in FIG. 2 is used as an example. FIG. 22 shows a path update method according to an embodiment of this application. The path update method includes the following steps.

S2201 and S2202 are respectively the same as steps S1401 and S1402. For related descriptions, reference may be made to the embodiment shown in FIG. 14. Details are not described herein again.

S2203. The SMF network element sends an N4 session establishment/modification request 1 to the PSA, so that the PSA receives the N4 session establishment/modification request 1 from the SMF network element.

The N4 session establishment/modification request 1 is used to request the PSA to allocate, to the terminal, first path information corresponding to the PSA. For related descriptions of the first path information, reference may be made to the embodiment shown in FIG. 4. Details are not described herein again.

S2204 is the same as step S1404. For related descriptions, reference may be made to the embodiment shown in FIG. 14. Details are not described herein again.

S2205. The PSA updates second path information to the first path information.

For related descriptions of the second path information, reference may be made to the embodiment shown in FIG. 4. Details are not described herein again.

S2206 to S2214 are respectively the same as steps S1406 to S1414. For the related implementation, reference may be made to the embodiment shown in FIG. 14. Details are not described herein again.

Based on the path update method provided in this embodiment of this application, when the 1-UPF network element is deleted, a corresponding user plane path can be updated in a timely manner. For analysis of related technical effects, reference may be made to the foregoing content of the path update system. Details are not described herein again.

Actions of the SMF network element or the PSA in steps S2201 to S2414 may be performed by the processor 301 in the communications device 300 shown in FIG. 3 by invoking application program code stored in the memory 303. No limitation is imposed thereto in this embodiment of this application.

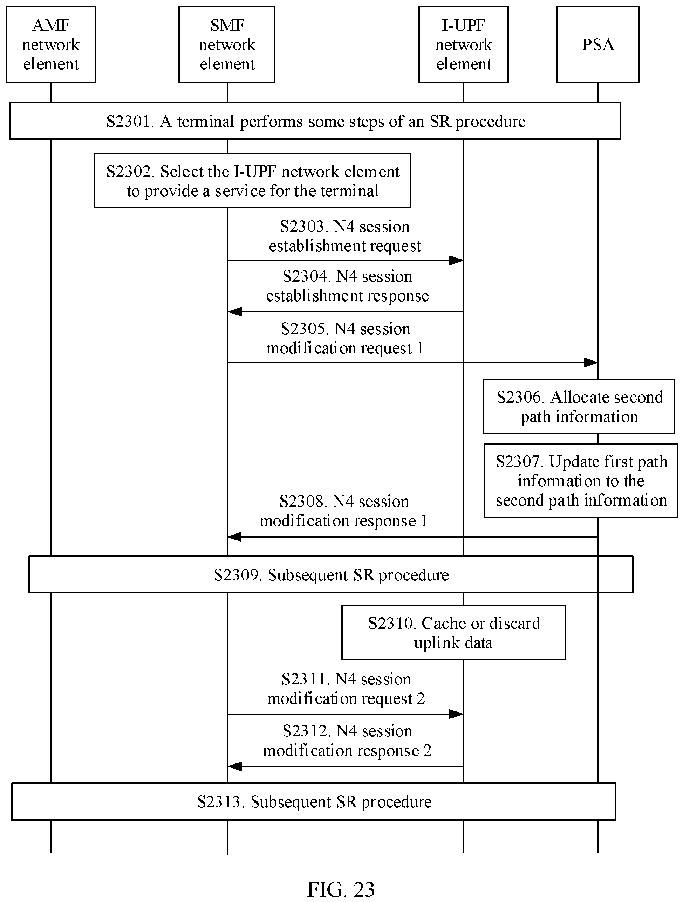

Optionally, that the path update system shown in FIG. 1 is applied to the 5G network shown in FIG. 2 is used as an example. FIG. 23 shows a path update method according to an embodiment of this application. The path update method includes the following steps.

S2301 and S2302 are respectively similar to steps S2001 and S2002, and are different from steps S2001 and S2002 in that, for example, this embodiment of this application is targeted only for an SR procedure. For other related descriptions, reference may be made to the embodiment shown in FIG. 20. Details are not described herein again.

S2303. The SMF network element sends an N4 session establishment request to the 1-UPF network element, so that the 1-UPF network element receives the session establishment request from the SMF network element.

S2304. The 1-UPF network element sends an N4 session establishment response to the SMF network element, so that the SMF network element receives the session establishment response from the 1-UPF network element.

For steps S2303 and S2304, reference may be made to an existing implementation. Details are not described herein.

S2305 to S2308 are respectively the same as steps S2003 to S2006. For related descriptions, reference may be made to the embodiment shown in FIG. 20. Details are not described herein again.

S2309 to S2313 are respectively the same as steps S1509 to S1513. For related descriptions, reference may be made to the embodiment shown in FIG. 15. Details are not described herein again.

Based on the path update method provided in this embodiment of this application, when the 1-UPF network element is inserted, a corresponding user plane path can be updated in a timely manner. For analysis of related technical effects, reference may be made to the foregoing content of the path update system. Details are not described herein again.

Optionally, the SR procedure in steps S2301 to S2309 in this embodiment of this application may be replaced with an Xn HO procedure. In this case, correspondingly, steps S2311 and S2312 are performed in a registration update procedure after the Xn HO procedure. Other steps of the registration update procedure are performed after step S2312. This is not specifically limited in this embodiment of this application.

Actions of the SMF network element or the PSA in steps S2301 to S2313 may be performed by the processor 301 in the communications device 300 shown in FIG. 3 by invoking application program code stored in the memory 303. No limitation is imposed thereto in this embodiment of this application.

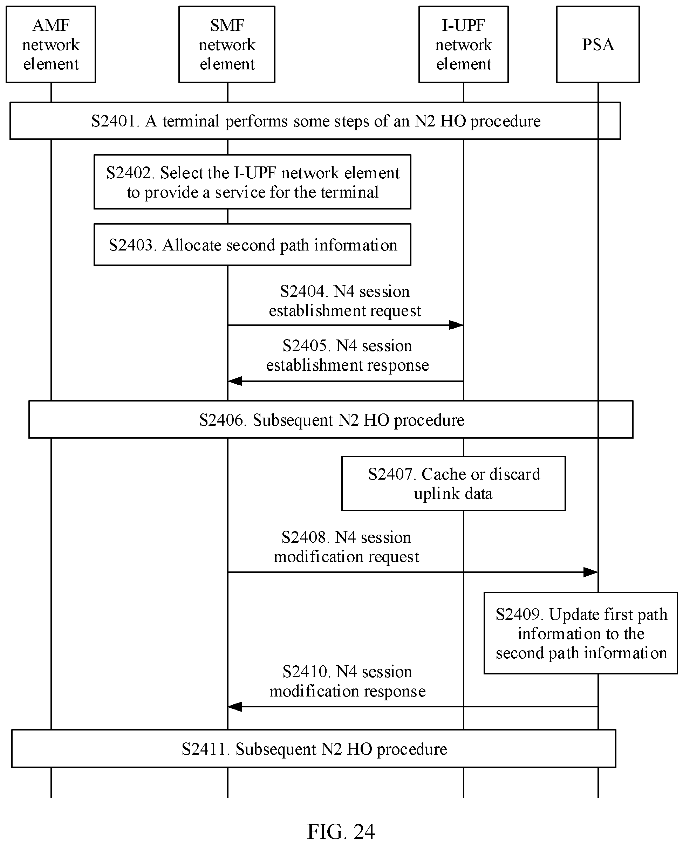

Optionally, that the path update system shown in FIG. 1 is applied to the 5G network shown in FIG. 2 is used as an example. FIG. 24 shows a path update method according to an embodiment of this application. The path update method includes the following steps.

S2401 and S2402 are respectively similar to steps S1901 and S1902, and are different from steps S1901 and S1902 in that, for example, this embodiment of this application is targeted only for an N2 HO procedure. For other related descriptions, reference may be made to the embodiment shown in FIG. 19. Details are not described herein again.

S2403 is the same as step S1903. For related descriptions, reference may be made to the embodiment shown in FIG. 19. Details are not described herein again.

S2404 and S2405 are respectively the same as steps S1907 and S1908. For related descriptions, reference may be made to the embodiment shown in FIG. 19. Details are not described herein again.

S2406. Perform a subsequent N2 HO procedure.

In this case, the PSA may send downlink data to the 1-UPF network element. However, the 1-UPF network element does not know the second path information corresponding to the PSA, and therefore cannot send uplink data to the PSA.

S2007. The 1-UPF network element caches received uplink data or discards received uplink data.

S2408 to S2410 are respectively the same as steps S1904 to S1906. For related descriptions, reference may be made to the embodiment shown in FIG. 19. Details are not described herein again.

S2411. Perform a subsequent N2 HO procedure.

Based on the path update method provided in this embodiment of this application, when the 1-UPF network element is inserted, a corresponding user plane path can be updated in a timely manner on a premise that a data packet processing manner is not changed. For analysis of related technical effects, reference may be made to the foregoing content of the path update system. Details are not described herein again.

Actions of the SMF network element or the PSA in steps S2401 to S2411 may be performed by the processor 301 in the communications device 300 shown in FIG. 3 by invoking application program code stored in the memory 303. No limitation is imposed thereto in this embodiment of this application.

The foregoing mainly describes the solutions provided in the embodiments of this application from a perspective of interaction between various network elements. It can be understood that, to implement the foregoing functions, the anchor user plane network element or the session management network element includes corresponding hardware structures and/or software modules for executing the functions. A person skilled in the art should easily be aware that, in combination with the example units and algorithm steps described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional modules of the anchor user plane network element or the session management network element may be obtained through division based on the foregoing method examples. For example, each functional module may be obtained through division in correspondence to each function, or at least two functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

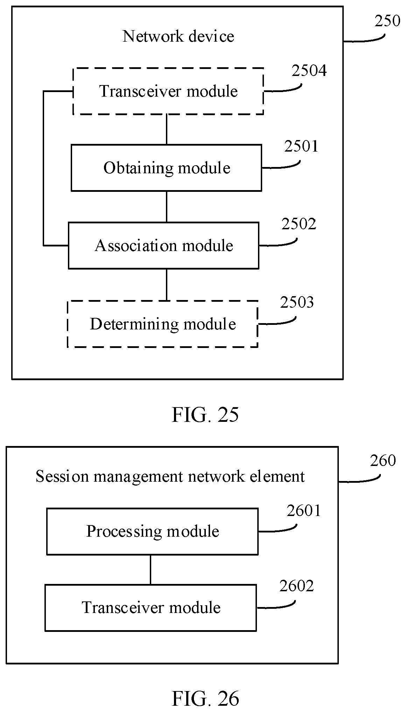

For example, when each functional module is obtained through division in an integrated manner, FIG. 25 is a schematic structural diagram of a network device 250. The network device 250 may be an anchor session management network element or a session management network element. The network element includes an obtaining module 2501 and a processing module 2502. The obtaining module 2501 is configured to obtain target path information, where the target path information includes first path information and/or second path information that are/is corresponding to an anchor user plane network element and that are/is allocated to a terminal. The first path information is used to establish a first path between the anchor user plane network element and an access device, and the second path information is used to establish a second path between the anchor user plane network element and an intermediate user plane network element. The processing module 2502 is configured to associate the target path information with a target data packet processing policy, where the target data packet processing policy is used to process a data packet received from the first path and the second path.

In a possible implementation, the target path information is the first path information and the second path information, the network device is a session management network element, and correspondingly the obtaining module 2501 is specifically configured to: allocate the first path information and the second path information to the terminal. Correspondingly, as shown in FIG. 25, the network device 250 further includes a determining module 2503. The determining module 2503 is configured to determine the target data packet processing policy.

Optionally, the processing module 2502 is specifically configured to: generate a first rule based on the first path information and the target data packet processing policy, where the first rule includes the first path information and the target data packet processing policy; and generate, for the session management network element, a second rule based on the second path information and the target data packet processing policy, where the second rule includes the second path information and the target data packet processing policy. Correspondingly, as shown in FIG. 25, the network device 250 further includes a transceiver module 2504. The transceiver module 2504 is configured to send the first rule and the second rule to the anchor user plane network element.

Alternatively, optionally, the processing module 2502 is specifically configured to generate a third rule based on the first path information, the second path information, and the target data packet processing policy, where the third rule includes the first path information, the second path information, and the target data packet processing policy. Correspondingly, as shown in FIG. 25, the network device 250 further includes a transceiver module 2504. The transceiver module 2504 is configured to send the third rule to the anchor user plane network element.

Optionally, the transceiver module 2504 is further configured to send first indication information to the anchor user plane network element, where the first indication information is used by the anchor user plane network element to establish the first path or the second path.

In another possible implementation, the target path information is the first path information and the second path information, the network device 250 is the anchor user plane network element, and correspondingly the obtaining module 2501 is specifically configured to: receive second indication information from a session management network element, where the second indication information is used to indicate the anchor user plane network element to allocate the first path information and the second path information to the terminal; and allocate the first path information and the second path information to the terminal based on the second indication information. Correspondingly, as shown in FIG. 25, the network device 250 further includes a transceiver module 2504. The transceiver module 2504 is configured to receive the target data packet processing policy from the session management network element.

Optionally, the transceiver module 2504 is specifically configured to receive a first rule and a second rule from the session management network element, where both the first rule and the second rule include the target data packet processing policy. Correspondingly, the processing module 2502 is specifically configured to: associate the first path information with the first rule, and associate, for the anchor user plane network element, the second path information with the second rule.

Alternatively, optionally, the transceiver module 2504 is specifically configured to receive a third rule from the session management network element, where the third rule includes the target data packet processing policy. Correspondingly, the processing module 2502 is specifically configured to associate the first path information and the second path information with the third rule.

Optionally, the transceiver module 2504 is further configured to receive first indication information from the session management network element, where the first indication information is used by the anchor user plane network element to establish the first path or the second path.

In another possible implementation, the target path information is the second path information, the network device 250 is a session management network element, and correspondingly the obtaining module 2501 is specifically configured to allocate the second path information to the terminal. Correspondingly, the processing module 2502 is specifically configured to generate a second rule based on the target data packet processing policy and the second path information, where the second rule includes the target data packet processing policy and the second path information. Correspondingly, as shown in FIG. 25, the network device 250 further includes a transceiver module 2504. The transceiver module 2504 is configured to send the second rule to the anchor user plane network element, and the transceiver module 2504 is configured to send the second path information to the intermediate user plane network element.

In another possible implementation, the target path information is the second path information, the network device 250 is a session management network element, and correspondingly the obtaining module 2501 is specifically configured to allocate the second path information to the terminal. Correspondingly, the processing module 2502 is specifically configured to: obtain a first rule corresponding to the first path information, where the first rule includes the first path information and the target data packet processing policy; and associate the second path information with the first rule to obtain an updated first rule. Correspondingly, as shown in FIG. 25, the network device 250 further includes a transceiver module 2504. The transceiver module 2504 is configured to send the updated first rule to the anchor user plane network element, and the transceiver module 2504 is further configured to send the second path information to the intermediate user plane network element.

In another possible implementation, the target path information is the second path information, the network device 250 is the anchor user plane network element, and correspondingly the obtaining module 2501 is specifically configured to receive the second path information and third indication information from a session management network element, where the third indication information is used to indicate the anchor user plane network element to associate the second path information with a first rule, and the first rule includes the first path information and the target data packet processing policy. Correspondingly, the processing module 2502 is specifically configured to associate, for the anchor user plane network element, the second path information with the first rule based on the third indication information.

In another possible implementation, the target path information is the second path information, the network device 250 is the anchor user plane network element, and correspondingly the obtaining module 2501 is specifically configured to: receive fourth indication information from a session management network element, where the fourth indication information is used to indicate the anchor user plane network element to allocate the second path information to the terminal; and allocate the second path information to the terminal based on the fourth indication information. Correspondingly, the processing module 2502 is specifically configured to: receive third indication information from the session management network element, where the third indication information is used to indicate the anchor user plane network element to associate the second path information with a first rule, and the first rule includes the first path information and the target data packet processing policy; and associate, for the anchor user plane network element, the second path information with the first rule based on the third indication information. Alternatively, the processing module 2502 is specifically configured to: receive a second rule from the session management network element, where the second rule includes the target data packet processing policy; and associate, for the anchor user plane network element, the second path information with the second rule. Correspondingly, as shown in FIG. 25, the network device 250 further includes a transceiver module 2504. The transceiver module 2504 is configured to send the second path information to the session management network element.

In another possible implementation, the target path information is the first path information, the network device 250 is a session management network element, and correspondingly the obtaining module 2501 is specifically configured to allocate the first path information to the terminal. Correspondingly, the processing module 2502 is specifically configured to generate a first rule based on the target data packet processing policy and the first path information, where the first rule includes the target data packet processing policy and the first path information. Correspondingly, as shown in FIG. 25, the network device 250 further includes a transceiver module 2504. The transceiver module 2504 is configured to send the first rule to the anchor user plane network element, and the transceiver module 2504 is further configured to send the first path information to the access device.

In another possible implementation, the target path information is the first path information, the network device 250 is a session management network element, and correspondingly the obtaining module 2501 is specifically configured to allocate the first path information to the terminal. Correspondingly, the processing module 2502 is specifically configured to: obtain a second rule corresponding to the second path information, where the second rule includes the second path information and the target data packet processing policy; and associate the first path information with the second rule to obtain an updated second rule. Correspondingly, as shown in FIG. 25, the network device 250 further includes a transceiver module 2504. The transceiver module 2504 is configured to send the updated second rule to the anchor user plane network element, and the transceiver module 2504 is further configured to send the first path information to the access device.

In another possible implementation, the target path information is the first path information, the network device 250 is the anchor user plane network element, and correspondingly the obtaining module 2501 is specifically configured to receive the first path information and fifth indication information from a session management network element, where the fifth indication information is used to indicate the anchor user plane network element to associate the first path information with a second rule, and the second rule includes the second path information and the target data packet processing policy. Correspondingly, the processing module 2502 is specifically configured to associate the first path information with the second rule based on the fifth indication information.

In another possible implementation, the target path information is the first path information, the network device 250 is the anchor user plane network element, and correspondingly the obtaining module 2501 is specifically configured to: receive sixth indication information from a session management network element, where the sixth indication information is used to indicate the anchor user plane network element to allocate the first path information to the terminal; and allocate the first path information to the terminal based on the sixth indication information. Correspondingly, the processing module 2502 is specifically configured to: receive fifth indication information from the session management network element, where the fifth indication information is used to indicate the anchor user plane network element to associate the first path information with a second rule, and the second rule includes the second path information and the target data packet processing policy; and associate, for the anchor user plane network element, the first path information with the second rule based on the fifth indication information. Alternatively, the processing module 2502 is specifically configured to: receive a first rule from the session management network element, where the first rule includes the target data packet processing policy; and associate, for the anchor user plane network element, the first path information with the first rule. Correspondingly, as shown in FIG. 25, the network device 250 further includes a transceiver module 2504. The transceiver module 2504 is configured to send the first path information to the session management network element.

All related content of various steps in the foregoing method embodiment may be cited in function descriptions of a corresponding functional module. Details are not described herein again.In this embodiment, the network device 250 is presented with the functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the form shown in FIG. 3 may be used for the network device 250.

For example, the processor 301 in FIG. 3 may invoke a computer executable instruction stored in the memory 303, so that the network device 250 performs the path update method in the foregoing method embodiment.

Specifically, functions/implementation processes of the obtaining module 2501, the processing module 2502, the determining module 2503, and the transceiver module 2504 in FIG. 25 may be implemented by the processor 301 in FIG. 3 by invoking the computer executable instruction stored in the memory 303. Alternatively, functions/implementation processes of the obtaining module 2501, the processing module 2502, and the determining module 2503 in FIG. 25 may be implemented by the processor 301 in FIG. 3 by invoking the computer executable instruction stored in the memory 303; and a function/implementation process of the transceiver module 2504 in FIG. 25 may be implemented by the communications interface 304 in FIG. 3.

The network device provided in this embodiment may perform the path update method. Therefore, for technical effects that can be achieved by the network device, reference may be made to the foregoing method embodiment. Details are not described herein again.

Optionally, an embodiment of this application further provides a chip system. The chip system includes a processor, configured to support a network device in implementing the path update method, for example, obtaining target path information. In a possible design, the chip system further includes a memory. The memory is configured to store a program instruction and data that are necessary for the network device. Certainly, the memory may alternatively not be in the chip system. The chip system may include a chip, or may include a chip and another discrete device. This is not specifically limited in this embodiment of this application.

For example, when each functional module is obtained through division in an integrated manner, FIG. 26 is a schematic structural diagram of a session management network element 260. The session management network element 260 includes a processing module 2601 and a transceiver module 2602.

In a possible implementation,
the processing module 2601 is configured to allocate, to a terminal, first path information and second path information that are corresponding to an anchor user plane network element, where the first path information is used to establish a first path between the anchor user plane network element and an access device, and the second path information is used to establish a second path between the anchor user plane network element and an intermediate user plane network element. The transceiver module 2602 is configured to send the first path information and the second path information to the anchor user plane network element.

Optionally, the transceiver module 2602 is further configured to send indication information to the anchor user plane network element, where the indication information is used by the anchor user plane network element to establish the first path or the second path.

In another possible implementation,
the processing module 2601 is configured to allocate, to a terminal, path information corresponding to an anchor user plane network element, where the path information is used to establish a first path between the anchor user plane network element and an access device and a second path between the anchor user plane network element and an intermediate user plane network element. The transceiver module 2602 is configured to send the path information to the anchor user plane network element.

Optionally, the transceiver module 2602 is further configured to send indication information to the anchor user plane network element, where the indication information is used by the anchor user plane network element to establish the first path or the second path.

In another possible implementation,
the processing module 2601 is configured to allocate, to a terminal, first target path information corresponding to an anchor user plane network element, where the first target path information includes first path information or second path information; and the first path information is used to establish a first path between the anchor user plane network element and an access device, and the second path information is used to establish a second path between the anchor user plane network element and an intermediate user plane network element. The transceiver module 2602 is further configured to send the first target path information to the anchor user plane network element, where the first target path information is used to update second target path information. When the first target path information is the first path information, the second target path information is the second path information; or when the first target path information is the second path information, the second target path information is the first path information.

All related content of various steps in the foregoing method embodiments may be cited in function descriptions of a corresponding functional module. Details are not described herein again.

In this embodiment, the session management network element 260 is presented with the functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the form shown in FIG. 3 may be used for the session management network element 260.

For example, the processor 301 in FIG. 3 may invoke a computer executable instruction stored in the memory 303, so that the session management network element 260 performs the path update methods in the foregoing method embodiments.

Specifically, functions/implementation processes of the processing module 2601 and the transceiver module 2602 in FIG. 26 may be implemented by the processor 301 in FIG. 3 by invoking the computer executable instruction stored in the memory 303. Alternatively, a function/implementation process of the processing module 2601 in FIG. 26 may be implemented by the processor 301 in FIG. 3 by invoking the computer executable instruction stored in the memory 303; and a function/implementation process of the transceiver module 2602 in FIG. 26 may be implemented by the communications interface 304 in FIG. 3.

The session management network element provided in this embodiment may perform the path update methods. Therefore, for technical effects that can be achieved by the session management network element, reference may be made to the foregoing method embodiments. Details are not described herein again.

Optionally, an embodiment of this application further provides a chip system. The chip system includes a processor, configured to support a session management network element in implementing the path update methods, for example, allocating, to a terminal, first path information and second path information that are corresponding to an anchor user plane network element. In a possible design, the chip system further includes a memory. The memory is configured to store a program instruction and data that are necessary for the session management network element. Certainly, the memory may alternatively not be in the chip system. The chip system may include a chip, or may include a chip and another discrete device. This is not specifically limited in this embodiment of this application.

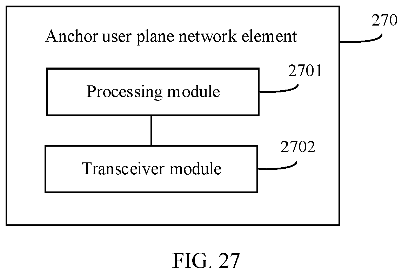

For example, when each functional module is obtained through division in an integrated manner, FIG. 27 is a schematic structural diagram of an anchor user plane network element 270. The anchor user plane network element 270 includes a processing module 2701 and a transceiver module 2702.

In a possible implementation,
the transceiver module 2702 is configured to receive a request message from a session management network element, where the request message is used to request the anchor user plane network element to allocate, to a terminal, first path information and second path information that are corresponding to the anchor user plane network element; and the first path information is used to establish a first path between the anchor user plane network element and an access device, and the second path information is used to establish a second path between the anchor user plane network element and an intermediate user plane network element. The processing module 2701 is configured to allocates, to the terminal based on the request message, the first path information and the second path information that are corresponding to the anchor user plane network element. The transceiver module 2702 is further configured to send a response message to the session management network element, where the response message carries the first path information and the second path information that are corresponding to the anchor user plane network element.

Optionally, the transceiver module 2702 is further configured to receive indication information from the session management network element, where the indication information is used by the anchor user plane network element to establish the first path or the second path.

In another possible implementation,
the transceiver module 2702 is configured to receive a request message from a session management network element, where the request message is used to request the anchor user plane network element to allocate, to a terminal, path information corresponding to the anchor user plane network element; and the path information is used to establish a first path between the anchor user plane network element and an access device and a second path between the anchor user plane network element and an intermediate user plane network element. The processing module 2701 is configured to allocates, to the terminal based on the request message, the path information corresponding to the anchor user plane network element. The transceiver module 2702 is further configured to send a response message to the session management network element, where the response message carries the path information corresponding to the anchor user plane network element.

Optionally, the transceiver module 2702 is further configured to receive indication information from the session management network element, where the indication information is used by the anchor user plane network element to establish the first path or the second path.

In another possible implementation,
the transceiver module 2702 is configured to receive a request message from a session management network element, where the request message is used to request the anchor user plane network element to allocate, to a terminal, first target path information corresponding to the anchor user plane network element; the first target path information includes first path information or second path information; and the first path information is used to establish a first path between the anchor user plane network element and an access device, and the second path information is used to establish a second path between the anchor user plane network element and an intermediate user plane network element. The processing module 2701 is configured to allocate, to the terminal, the first target path information corresponding to the anchor user plane network element. The processing module 2701 is further configured to update second target path information to the first target path information. When the first target path information is the first path information, the second target path information is the second path information; or when the first target path information is the second path information, the second target path information is the first path information. The transceiver module 2702 is further configured to send a response message to the session management network element, where the response message carries the first target path information, and the first target path information is used to update the second target path information.

All related content of various steps in the foregoing method embodiments may be cited in function descriptions of a corresponding functional module. Details are not described herein again.

In this embodiment, the anchor user plane network element 270 is presented with the functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the form shown in FIG. 3 may be used for the anchor user plane network element 270.

For example, the processor 301 in FIG. 3 may invoke a computer executable instruction stored in the memory 303, so that the anchor user plane network element 270 performs the path update methods in the foregoing method embodiments.

Specifically, functions/implementation processes of the processing module 2701 and the transceiver module 2702 in FIG. 27 may be implemented by the processor 301 in FIG. 3 by invoking the computer executable instruction stored in the memory 303. Alternatively, a function/implementation process of the processing module 2701 in FIG. 27 may be implemented by the processor 301 in FIG. 3 by invoking the computer executable instruction stored in the memory 303; and a function/implementation process of the transceiver module 2702 in FIG. 27 may be implemented by the communications interface 304 in FIG. 3.

The anchor user plane network element provided in this embodiment may perform the path update methods. Therefore, for technical effects that can be achieved by the anchor user plane network element, reference may be made to the foregoing method embodiments. Details are not described herein again.

Optionally, an embodiment of this application further provides a chip system. The chip system includes a processor, configured to support an anchor user plane network element in implementing the path update methods, for example, allocating, to a terminal based on a request message, first path information and second path information that are corresponding to the anchor user plane network element. In a possible design, the chip system further includes a memory. The memory is configured to store a program instruction and data that are necessary for the anchor user plane network element. Certainly, the memory may alternatively not be in the chip system. The chip system may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, obviously, various modifications and combinations may be made to them without departing from the scope of this application. Correspondingly, the specification and accompanying drawings are merely example description of this application defined by the accompanying claims, and is considered as any of or all modifications, variations, combinations or equivalents that cover the scope of this application.

## Claims

1. A path update method during session management procedures, wherein the method comprises:
obtaining, by a session management network element (101,260), target path information, wherein the target path information comprises first target path information and second target path information that are corresponding to an anchor user plane network element (102,270) and that are allocated to a terminal, the first target path information is used to establish a first path (N3) between the anchor user plane network element (102,270) and an access device (104), and the second target path information is used to establish a second path (N9) between the anchor user plane network element (102,270) and an intermediate user plane network element (103);
associating, by the session management network element (101,260), the target path information with a target data packet processing policy, wherein the target data packet processing policy is used to process a data packet received from the first path (N3) and the second path (N9);the obtaining, by a session management network element (101, 260), target path information specifically comprises:
allocating (S403), by the session management network element (101,260), the first target path information and the second target path information to the terminal; and
correspondingly, the method further comprises:
determining (S404), by the session management network element (101,260), the target data packet processing policy;wherein the associating, by the session management network element (101,260), the target path information with a target data packet processing policy specifically comprises:
generating (S404), by the session management network element (101, 260), a first rule based on the first target path information and the target data packet processing policy, wherein the first rule comprises the first target path information and the target data packet processing policy; and generating, by the session management network element, a second rule based on the second target path information and the target data packet processing policy, wherein the second rule comprises the second target path information and the target data packet processing policy; correspondingly, the method further comprises:
sending (S406), by the session management network element (101, 260), the first rule and the second rule to the anchor user plane network element (102,270).

2. The path update method during session management procedures according to claim 1, wherein the associating, by the session management network element (101,260), the target path information with a target data packet processing policy specifically comprises:
generating (S505), by the session management network element (101,260), a third rule based on the first target path information, the second target path information, and the target data packet processing policy, wherein the third rule comprises the first target path information, the second target path information, and the target data packet processing policy; and
correspondingly, the method further comprises:
sending (S506), by the session management network element (101,260), the third rule to the anchor user plane network element (102,270).

3. The path update during session management procedures method according to claim 1 or 2, wherein the method further comprises:
sending (S506), by the session management network element (101,260), first indication information to the anchor user plane network element (102,270), wherein the first indication information is used by the anchor user plane network element (102,270) to establish the first path (N3) or the second path (N9).

4. The path update method during session management procedures according to claim 1, wherein the target path information is the first path information and the second path information, and correspondingly, the obtaining, by the anchor user plane network element (102,270), target path information comprises:
receiving (S603), by the anchor user plane network element (102,270), second indication information from a session management network element (101,260), wherein the second indication information is used to indicate the anchor user plane network element (102,270) to allocate the first target path information and the second target path information to the terminal; and
allocating (S604), by the anchor user plane network element (102,270), the first target path information and the second target path information to the terminal based on the second indication information; and
correspondingly, the method further comprises:
receiving (S603), by the anchor user plane network element (102,270), the target data packet processing policy from the session management network element (101,260).

5. The path update during session management procedures method according to claim 4, wherein the receiving (S603), by the anchor user plane network element (102,270), the target data packet processing policy from the session management network element (101,260) specifically comprises:
receiving (S603), by the anchor user plane network element (102,270), a first rule and a second rule from the session management network element (101,260), wherein both the first rule and the second rule comprise the target data packet processing policy; and
correspondingly, the associating (S605), by the anchor user plane network element (102,270), the target path information with a target data packet processing policy specifically comprises:
associating (S605), by the anchor user plane network element (102,270), the first target path information with the first rule, and associating, by the anchor user plane network element (102,270), the second target path information with the second rule.

6. The path update during session management procedures method according to claim 4, wherein the receiving (S603), by the anchor user plane network element (102,270), the target data packet processing policy from the session management network element (101,260) specifically comprises:
receiving (S603), by the anchor user plane network element (102,270), a third rule from the session management network element (101,260), wherein the third rule comprises the target data packet processing policy; and
correspondingly, the associating (S605), by the anchor user plane network element (102,270), the target path information with a target data packet processing policy specifically comprises:
associating (S605), by the anchor user plane network element, the first target path information and the second target path information with the third rule.

7. A path update method during session management procedures, wherein the method comprises:
receiving (S603), by an anchor user plane network element (102,270), a session establishment/modification request message from a session management network element (101,260), wherein the session establishment/modification request message is used to request the anchor user plane network element (102,270) to allocate, to a terminal, first target path information and second target path information that are corresponding to the anchor user plane network element (102,270), the first path information is used to establish a first path (N3) between the anchor user plane network element (102,270) and an access device, and the second path information is used to establish a second path (N9) between the anchor user plane network element (102,270) and an intermediate user plane network element (103), wherein the session establishment/modification request message carries a first rule and a second rule, wherein the first rule comprises the first target path information and an a target data packet processing policy and the second rule comprises the second target path information and a target data packet processing policy;
storing, by the anchor use plane network element (102,270), the first rule and the second rule;
allocating (S604), by the anchor user plane network element (102,270) to the terminal based on the request message, the first target path information and the second target path information that are corresponding to the anchor user plane network element (102,270);
and
sending (S606), by the anchor user plane network element (102,270), a response message to the session management network element (101,260), wherein the response message carries the first target path information and the second target path information that are corresponding to the anchor user plane network element (102,270).

8. The path update method during session management procedures according to claim 7, wherein the method further comprises:
receiving (S606), by the anchor user plane network element (102,270), indication information from the session management network element, wherein the indication information is used by the anchor user plane network element (102,270) to establish the first path (N3) or the second path (N9).

9. A session management network element (101,260), comprising a processor (2601) and a memory, wherein the memory is configured to store a computer-executable instruction, and when the session management network element (101,260) runs, the processor (2601) executes the computer-executable instruction stored in the memory, so that the session management network element (101,260) performs the path update method according to any one of claims 1 to 6.

10. An anchor user plane network element (102,270), comprising a processor (2701) and a memory, wherein the memory is configured to store a computer-executable instruction, and when the anchor user plane network element (102,270) runs, the processor (2601) executes the computer-executable instruction stored in the memory, so that the anchor user plane network element (102,270) performs the path update method according to claim 7 or 8.

## Patentansprüche

1. Pfadaktualisierungsverfahren während Sitzungsverwaltungsvorgängen, wobei das Verfahren Folgendes umfasst:
Erhalten, durch ein Sitzungsverwaltungs-Netzwerkelement (101, 260), von Zielpfadinformationen, wobei die Zielpfadinformationen erste Zielpfadinformationen und zweite Zielpfadinformationen umfassen, die einem Anker-Benutzerebenen-Netzwerkelement (102, 270) entsprechen und die einem Endgerät zugewiesen sind, wobei die ersten Zielpfadinformationen verwendet werden, um einen ersten Pfad (N3) zwischen dem Anker-Benutzerebenen-Netzwerkelement (102, 270) und einer Zugangsvorrichtung (104) herzustellen, und die zweiten Zielpfadinformationen verwendet werden, um einen zweiten Pfad (N9) zwischen dem Anker-Benutzerebenen-Netzwerkelement (102, 270) und einem Zwischen-Benutzerebenen-Netzwerkelement (103) herzustellen;
Zuordnen, durch das Sitzungsverwaltungs-Netzwerkelement (101, 260), der Zielpfadinformationen zu einer Zieldatenpaket-Verarbeitungsrichtlinie, wobei die Zieldatenpaket-Verarbeitungsrichtlinie verwendet wird, um ein von dem ersten Pfad (N3) und dem zweiten Pfad (N9) empfangenes Datenpaket zu verarbeiten; wobei das Erhalten, durch ein Sitzungsverwaltungs-Netzwerkelement (101, 260), von Zielpfadinformationen insbesondere Folgendes umfasst:
Zuweisen (S403), durch das Sitzungsverwaltungs-Netzwerkelement (101, 260), der ersten Zielpfadinformationen und der zweiten Zielpfadinformationen zu dem Endgerät; und
wobei dementsprechend das Verfahren ferner Folgendes umfasst:
Bestimmen (S404), durch das Sitzungsverwaltungs-Netzwerkelement (101, 260), der Zieldatenpaket-Verarbeitungsrichtlinie, wobei das Zuordnen, durch das Sitzungsverwaltungs-Netzwerkelement (101, 260), der Zielpfadinformationen zu einer Zieldatenpaket-Verarbeitungsrichtlinie insbesondere Folgendes umfasst:
Erzeugen (S404), durch das Sitzungsverwaltungs-Netzwerkelement (101, 260), einer ersten Regel basierend auf den ersten Zielpfadinformationen und der Zieldatenpaket-Verarbeitungsrichtlinie, wobei die erste Regel die ersten Zielpfadinformationen und die Zieldatenpaket-Verarbeitungsrichtlinie umfasst; und Erzeugen, durch das Sitzungsverwaltungs-Netzwerkelement, einer zweiten Regel basierend auf den zweiten Zielpfadinformationen und der Zieldatenpaket-Verarbeitungsrichtlinie, wobei die zweite Regel die zweiten Zielpfadinformationen und die Zieldatenpaket-Verarbeitungsrichtlinie umfasst; wobei dementsprechend das Verfahren ferner Folgendes umfasst:
Senden (S406), durch das Sitzungsverwaltungs-Netzwerkelement (101, 260), der ersten Regel und der zweiten Regel an das Anker-Benutzerebenen-Netzwerkelement (102, 270).

2. Pfadaktualisierungsverfahren während Sitzungsverwaltungsvorgängen nach Anspruch 1, wobei das Zuordnen, durch das Sitzungsverwaltungs-Netzwerkelement (101, 260), der Zielpfadinformationen zu einer Zieldatenpaket-Verarbeitungsrichtlinie insbesondere Folgendes umfasst:
Erzeugen (S505), durch das Sitzungsverwaltungs-Netzwerkelement (101, 260), einer dritten Regel basierend auf den ersten Zielpfadinformationen, den zweiten Zielpfadinformationen und der Zieldatenpaket-Verarbeitungsrichtlinie, wobei die dritte Regel die ersten Zielpfadinformationen, die zweiten Zielpfadinformationen und die Zieldatenpaket-Verarbeitungsrichtlinie umfasst; und
wobei dementsprechend das Verfahren ferner Folgendes umfasst:
Senden (S506), durch das Sitzungsverwaltungs-Netzwerkelement (101, 260), der dritten Regel an das Anker-Benutzerebenen-Netzwerkelement (102, 270).

3. Verfahren zur Pfadaktualisierung während Sitzungsverwaltungsvorgängen nach Anspruch 1 oder 2, wobei das Verfahren ferner Folgendes umfasst:
Senden (S506), durch das Sitzungsverwaltungs-Netzwerkelement (101, 260), von ersten Anzeigeinformationen an das Anker-Benutzerebenen-Netzwerkelement (102, 270), wobei die ersten Anzeigeinformationen durch das Anker-Benutzerebenen-Netzwerkelement (102, 270) verwendet werden, um den ersten Pfad (N3) oder den zweiten Pfad (N9) herzustellen.

4. Pfadaktualisierungsverfahren während Sitzungsverwaltungsvorgängen nach Anspruch 1, wobei die Zielpfadinformationen die ersten Pfadinformationen und die zweiten Pfadinformationen sind, und wobei dementsprechend das Erhalten, durch das Anker-Benutzerebenen-Netzwerkelement (102, 270), von Zielpfadinformationen Folgendes umfasst:
Empfangen (S603), durch das Anker-Benutzerebenen-Netzwerkelement (102, 270), von zweiten Anzeigeinformationen von einem Sitzungsverwaltungs-Netzwerkelement (101, 260), wobei die zweiten Anzeigeinformationen verwendet werden, um dem Anker-Benutzerebenen-Netzwerkelement (102, 270) anzuzeigen, die ersten Zielpfadinformationen und die zweiten Zielpfadinformationen zu dem Endgerät zuzuweisen; und
Zuweisen (S604), durch das Anker-Benutzerebenen-Netzwerkelement (102, 270), der ersten Zielpfadinformationen und der zweiten Zielpfadinformationen zu dem Endgerät basierend auf den zweiten Anzeigeinformationen; und
wobei dementsprechend das Verfahren ferner Folgendes umfasst:
Empfangen (S603), durch das Anker-Benutzerebenen-Netzwerkelement (102, 270), der Zieldatenpaket-Verarbeitungsrichtlinie von dem Sitzungsverwaltungs-Netzwerkelement (101, 260).

5. Verfahren zur Pfadaktualisierung während Sitzungsverwaltungsvorgängen nach Anspruch 4, wobei das Empfangen (S603), durch das Anker-Benutzerebenen-Netzwerkelement (102, 270), der Zieldatenpaket-Verarbeitungsrichtlinie von dem Sitzungsverwaltungs-Netzwerkelement (101, 260) insbesondere Folgendes umfasst:
Empfangen (S603), durch das Anker-Benutzerebenen-Netzwerkelement (102, 270), einer ersten Regel und einer zweiten Regel von dem Sitzungsverwaltungs-Netzwerkelement (101, 260), wobei sowohl die erste Regel als auch die zweite Regel die Zieldatenpaket-Verarbeitungsrichtlinie umfassen; und
wobei dementsprechend das Zuordnen (S605), durch das Anker-Benutzerebenen-Netzwerkelement (102, 270), der Zielpfadinformationen zu einer Zieldatenpaket-Verarbeitungsrichtlinie insbesondere Folgendes umfasst:
Zuordnen (S605), durch das Anker-Benutzerebenen-Netzwerkelement (102, 270), der ersten Zielpfadinformationen zu der ersten Regel, und Zuordnen, durch das Anker-Benutzerebenen-Netzwerkelement (102, 270), der zweiten Zielpfadinformationen zu der zweiten Regel.

6. Verfahren zur Pfadaktualisierung während Sitzungsverwaltungsvorgängen nach Anspruch 4, wobei das Empfangen (S603), durch das Anker-Benutzerebenen-Netzwerkelement (102, 270), der Zieldatenpaket-Verarbeitungsrichtlinie von dem Sitzungsverwaltungs-Netzwerkelement (101, 260) insbesondere Folgendes umfasst:
Empfangen (S603), durch das Anker-Benutzerebenen-Netzwerkelement (102, 270), einer dritten Regel von dem Sitzungsverwaltungs-Netzwerkelement (101, 260), wobei die dritte Regel die Zieldatenpaket-Verarbeitungsrichtlinie umfasst; und
wobei dementsprechend das Zuordnen (S605), durch das Anker-Benutzerebenen-Netzwerkelement (102, 270), der Zielpfadinformationen zu einer Zieldatenpaket-Verarbeitungsrichtlinie insbesondere Folgendes umfasst:
Zuordnen (S605), durch das Anker-Benutzerebenen-Netzwerkelement, der ersten Zielpfadinformationen und der zweiten Zielpfadinformationen zu der dritten Regel.

7. Pfadaktualisierungsverfahren während Sitzungsverwaltungsvorgängen, wobei das Verfahren Folgendes umfasst:
Empfangen (S603), durch ein Anker-Benutzerebenen-Netzwerkelement (102, 270), einer Sitzungsherstellungs-/-modifikationsaufforderungsnachricht von einem Sitzungsverwaltungs-Netzwerkelement (101, 260), wobei die Sitzungsherstellungs-/- modifikationsaufforderungsnachricht verwendet wird, um das Anker-Benutzerebenen-Netzwerkelement (102, 270) aufzufordern, zu einem Endgerät erste Zielpfadinformationen und zweite Zielpfadinformationen zuzuweisen, die dem Anker-Benutzerebenen-Netzwerkelement (102, 270) entsprechen, wobei die ersten Pfadinformationen verwendet werden, um einen ersten Pfad (N3) zwischen dem Anker-Benutzerebenen-Netzwerkelement (102, 270) und einer Zugangsvorrichtung herzustellen, und die zweiten Pfadinformationen verwendet werden, um einen zweiten Pfad (N9) zwischen dem Anker-Benutzerebenen-Netzwerkelement (102, 270) und einem Zwischen-Benutzerebenen-Netzwerkelement (103) herzustellen, wobei die Sitzungsherstellungs-/- modifikationsaufforderungsnachricht eine erste Regel und eine zweite Regel führt, wobei die erste Regel die ersten Zielpfadinformationen und eine Zieldatenpaket-Verarbeitungsrichtlinie umfasst und die zweite Regel die zweiten Zielpfadinformationen und eine Zieldatenpaket-Verarbeitungsrichtlinie umfasst;
Speichern, durch das Anker-Benutzerebenen-Netzwerkelement (102, 270), der ersten Regel und der zweiten Regel;
Zuweisen (S604), durch das Anker-Benutzerebenen-Netzwerkelement (102, 270) zu dem Endgerät basierend auf der Aufforderungsnachricht, der ersten Zielpfadinformationen und der zweiten Zielpfadinformationen, die dem Anker-Benutzerebenen-Netzwerkelement (102, 270) entsprechen;
und
Senden (S606), durch das Anker-Benutzerebenen-Netzwerkelement (102, 270), einer Antwortnachricht an das Sitzungsverwaltungs-Netzwerkelement (101, 260), wobei die Antwortnachricht die ersten Zielpfadinformationen und die zweiten Zielpfadinformationen führt, die dem Anker-Benutzerebenen-Netzwerkelement (102, 270) entsprechen.

8. Pfadaktualisierungsverfahren während Sitzungsverwaltungsvorgängen nach Anspruch 7, wobei das Verfahren ferner Folgendes umfasst:
Empfangen (S606), durch das Anker-Benutzerebenen-Netzwerkelement (102, 270), von Anzeigeinformationen von dem Sitzungsverwaltungs-Netzwerkelement, wobei die Anzeigeinformationen durch das Anker-Benutzerebenen-Netzwerkelement (102, 270) verwendet werden, um den ersten Pfad (N3) oder den zweiten Pfad (N9) herzustellen.

9. Sitzungsverwaltungs-Netzwerkelement (101, 260), umfassend einen Prozessor (2601) und einen Speicher, wobei der Speicher dazu konfiguriert ist, eine computerausführbare Anweisung zu speichern, und wobei, wenn das Sitzungsverwaltungs-Netzwerkelement (101, 260) läuft, der Prozessor (2601) die in dem Speicher gespeicherte computerausführbare Anweisung ausführt, so dass das Sitzungsverwaltungs-Netzwerkelement (101, 260) das Pfadaktualisierungsverfahren nach einem der Ansprüche 1 bis 6 durchführt.

10. Anker-Benutzerebenen-Netzwerkelement (102, 270), umfassend einen Prozessor (2701) und einen Speicher, wobei der Speicher dazu konfiguriert ist, eine computerausführbare Anweisung zu speichern, und wobei, wenn das Anker-Benutzerebenen-Netzwerkelement (102, 270) läuft, der Prozessor (2601) die in dem Speicher gespeicherte computerausführbare Anweisung ausführt, so dass das Anker-Benutzerebenen-Netzwerkelement (102, 270) das Pfadaktualisierungsverfahren nach Anspruch 7 oder 8 durchführt.

## Revendications

1. Procédé de mise à jour de chemin lors de procédures de gestion de session, dans lequel le procédé comprend :
l'obtention, par un élément de réseau de gestion de session (101, 260) d'informations de chemin cible, dans lequel les informations de chemin cible comprennent des premières informations de chemin cible et des secondes informations de chemin cible qui correspondent à un élément de réseau de plan d'utilisateur d'ancrage (102, 270) et qui sont attribuées à un terminal, les premières informations de chemin cible sont utilisées pour établir un premier chemin (N3) entre l'élément de réseau de plan d'utilisateur d'ancrage (102, 270) et un dispositif d'accès (104), et les secondes informations de chemin cible sont utilisées pour établir un second chemin (N9) entre l'élément de réseau de plan d'utilisateur d'ancrage (102, 270) et un élément de réseau de plan d'utilisateur intermédiaire (103) ;
l'association, par l'élément de réseau de gestion de session (101, 260), des informations de chemin cible à une politique de traitement de paquets de données cible, dans lequel la politique de traitement de paquets de données cible est utilisée pour traiter un paquet de données reçu depuis le premier chemin (N3) et le second chemin (N9) ; l'obtention, par un élément de réseau de gestion de session (101, 260) d'informations de chemin cible comprenant spécifiquement :
l'attribution (S403), par l'élément de réseau de gestion de session (101,260), des premières informations de chemin cible et des secondes informations de chemin cible au terminal ; et
de façon correspondante, le procédé comprend en outre :
la détermination (S404), par l'élément de réseau de gestion de session (101, 260), de la politique de traitement de paquets de données cible ; dans lequel l'association, par l'élément de réseau de gestion de session (101, 260), des informations de chemin cible à une politique de traitement de paquets de données cible comprend spécifiquement :
la génération (S404), par l'élément de réseau de gestion de session (101, 260), d'une première règle sur la base des premières informations de chemin cible et de la politique de traitement de paquets de données cible, dans lequel la première règle comprend les premières informations de chemin cible et la politique de traitement de paquets de données cible ; et la génération, par l'élément de réseau de gestion de session, d'une deuxième règle sur la base des secondes informations de chemin cible et de la politique de traitement de paquets de données cible, dans lequel la deuxième règle comprend les secondes informations de chemin cible et la politique de traitement de paquets de données cible ; de façon correspondante, le procédé comprend en outre :
l'envoi (S406), par l'élément de réseau de gestion de session (101, 260), de la première règle et de la deuxième règle à l'élément de réseau de plan d'utilisateur d'ancrage (102, 270).

2. Procédé de mise à jour de chemin lors de procédures de gestion de session selon la revendication 1, dans lequel l'association, par l'élément de réseau de gestion de session (101, 260), des informations de chemin cible à une politique de traitement de paquets de données cible comprend spécifiquement :
la génération (S505), par l'élément de réseau de gestion de session (101, 260), d'une troisième règle sur la base des premières informations de chemin cible, des secondes informations de chemin cible et de la politique de traitement de paquets de données cible, dans lequel la troisième règle comprend les premières informations de chemin cible, les secondes informations de chemin cible et la politique de traitement de paquets de données cible ; et
de façon correspondante, le procédé comprend en outre :
l'envoi (S506), par l'élément de réseau de gestion de session (101, 260), de la troisième règle à l'élément de réseau de plan d'utilisateur d'ancrage (102, 270).

3. Procédé de mise à jour de chemin lors de procédures de gestion de session selon la revendication 1 ou 2, dans lequel le procédé comprend en outre :
l'envoi (S506), par l'élément de réseau de gestion de session (101, 260), de premières informations d'indication à l'élément de réseau de plan d'utilisateur d'ancrage (102, 270), dans lequel les premières informations d'indication sont utilisées par l'élément de réseau de plan d'utilisateur d'ancrage (102, 270) pour établir le premier chemin (N3) ou le second chemin (N9).

4. Procédé de mise à jour de chemin lors de procédures de gestion de session selon la revendication 1, dans lequel les informations de chemin cible sont les premières informations de chemin cible et les secondes informations de chemin cible, et de façon correspondante, l'obtention, par l'élément de réseau de plan d'utilisateur d'ancrage (102, 270), des informations de chemin cible comprend :
la réception (S603), par l'élément de réseau de plan d'utilisateur d'ancrage (102, 270), de secondes informations d'indication depuis un élément de réseau de gestion de session (101, 260), dans lequel les secondes informations d'indication sont utilisées pour indiquer à l'élément de réseau de plan d'utilisateur d'ancrage (102, 270) d'attribuer les premières informations de chemin cible et les secondes informations de chemin cible au terminal ; et
l'attribution (S604), par l'élément de réseau de plan d'utilisateur d'ancrage (102, 270), des premières informations de chemin cible et des secondes informations de chemin cible au terminal sur la base des secondes informations d'indication ; et
de façon correspondante, le procédé comprend en outre :
la réception (S603), par l'élément de réseau de plan d'utilisateur d'ancrage (102, 270), de la politique de traitement de paquets de données cible depuis l'élément de réseau de gestion de session (101, 260).

5. Procédé de mise à jour de chemin lors de procédures de gestion de session selon la revendication 4, dans lequel la réception (S603), par l'élément de réseau de plan d'utilisateur d'ancrage (102, 270), de la politique de traitement de paquets de données cible depuis l'élément de réseau de gestion de session (101, 260) comprend spécifiquement :
la réception (S603), par l'élément de réseau de plan d'utilisateur d'ancrage (102, 270), d'une première règle et d'une deuxième règle depuis l'élément de réseau de gestion de session (101, 260), dans lequel la première règle et la deuxième règle comprennent toutes deux la politique de traitement de paquets de données ; et
de façon correspondante, l'association (S605), par l'élément de réseau de plan d'utilisateur d'ancrage (102, 270), des informations de chemin cible à une politique de traitement de paquets de données cible comprend spécifiquement :
l'association (S605), par l'élément de réseau de plan d'utilisateur d'ancrage (102, 270), des premières informations de chemin cible à la première règle, et l'association, par l'élément de réseau de plan d'utilisateur d'ancrage (102, 270), des secondes informations de chemin cible à la deuxième règle.

6. Procédé de mise à jour de chemin lors de procédures de gestion de session selon la revendication 4, dans lequel la réception (S603), par l'élément de réseau de plan d'utilisateur d'ancrage (102, 270), de la politique de traitement de paquets de données cible depuis l'élément de réseau de gestion de session (101, 260) comprend spécifiquement :
la réception (S603), par l'élément de réseau de plan d'utilisateur d'ancrage (102, 270), d'une troisième règle depuis l'élément de réseau de gestion de session (101, 260), dans lequel la troisième règle comprend la politique de traitement de paquets de données ; et
de façon correspondante, l'association (S605), par l'élément de réseau de plan d'utilisateur d'ancrage (102, 270), des informations de chemin cible à une politique de traitement de paquets de données cible comprend spécifiquement :
l'association (S605), par l'élément de réseau de plan d'utilisateur d'ancrage, des premières informations de chemin cible et des secondes informations de chemin cible à la troisième règle.

7. Procédé de mise à jour de chemin lors de procédures de gestion de session, dans lequel le procédé comprend :
la réception (S603), par un élément de réseau de plan d'utilisateur d'ancrage (102, 270), d'un message de demande de modification/d'établissement de session depuis un élément de réseau de gestion de session (101, 260), dans lequel le message de demande de modification/d'établissement de session est utilisé pour demander à l'élément de réseau de plan d'utilisateur d'ancrage (102, 270) d'attribuer, à un terminal, des premières informations de chemin cible et des secondes informations de chemin cible qui correspondent à l'élément de réseau de plan d'utilisateur d'ancrage (102, 270), les premières informations de chemin cible sont utilisées pour établir un premier chemin (N3) entre l'élément de réseau de plan d'utilisateur d'ancrage (102, 270) et un dispositif d'accès, et les secondes informations de chemin cible sont utilisées pour établir un second chemin (N9) entre l'élément de réseau de plan d'utilisateur d'ancrage (102, 270) et un élément de réseau de plan d'utilisateur intermédiaire (103), dans lequel le message de demande de modification/d'établissement de session transporte une première règle et une deuxième règle, dans lequel la première règle comprend les premières informations de chemin cible et une politique de traitement de paquets de données cible et la seconde règle comprend les secondes informations de chemin cible et une politique de traitement de paquets de données cible ;
le stockage, par l'élément de réseau de plan d'utilisateur d'ancrage (102, 270), de la première règle et de la seconde règle ;
l'attribution (S604), par l'élément de réseau de plan d'utilisateur d'ancrage (102, 270) au terminal sur la base du message de demande, des premières informations de chemin cible et des secondes informations de chemin cible qui correspondent à l'élément de réseau de plan d'utilisateur d'ancrage (102, 270) ; et
l'envoi (S606), par l'élément de réseau de plan d'utilisateur d'ancrage (102, 270), d'un message de réponse à l'élément de réseau de gestion de session (101, 260), dans lequel le message de réponse transporte les premières informations de chemin cible et les secondes informations de chemin cible qui correspondent à l'élément de réseau de plan d'utilisateur d'ancrage (102, 270).

8. Procédé de mise à jour de chemin lors de procédures de gestion de session selon la revendication 7, dans lequel le procédé comprend en outre :
la réception (S606), par l'élément de réseau de plan d'utilisateur d'ancrage (102, 270), d'informations d'indication depuis l'élément de réseau de gestion de session, dans lequel les informations d'indication sont utilisées par l'élément de réseau de plan d'utilisateur d'ancrage (102, 270) pour établir le premier chemin (N3) ou le second chemin (N9).

9. Élément de réseau de gestion de session (101, 260), comprenant un processeur (2601) et une mémoire, dans lequel la mémoire est configurée pour stocker des instructions exécutables par ordinateur, et lorsque l'élément de réseau de gestion de session (101, 260) est exécuté, le processeur (2601) exécute les instructions exécutables par ordinateur stockées dans la mémoire, de sorte que l'élément de réseau de gestion de session (101, 260) exécute le procédé de mise à jour de chemin selon l'une quelconque des revendications 1 à 6.

10. Élément de réseau de plan d'utilisateur d'ancrage (102, 270), comprenant un processeur (2701) et une mémoire, dans lequel la mémoire est configurée pour stocker des instructions exécutables par ordinateur, et lorsque l'élément de réseau de plan d'utilisateur d'ancrage (102, 270) est exécuté, le processeur (2701) exécute les instructions exécutables par ordinateur stockées dans la mémoire, de sorte que l'élément de réseau de plan d'utilisateur d'ancrage (102, 270) exécute le procédé de mise à jour de chemin selon la revendication 7 ou 8.
